# EUROPÄISCHE PATENTANMELDUNG

(11) **EP 4 286 080 A2**
(43) Veröffentlichungstag der Anmeldung: **06.12.2023**
(21) Anmeldenummer: 23198307.3
(22) Anmeldetag: 06.08.2021
(51) Int. Cl.: B23B 5/16

(54) **SCHÄLGERÄT UND SPANNBAUGRUPPE**

(30) Priorität: 06.08.2020 DE 102020120792
(62) Teilanmeldung aus: 21190093.1
(71) Anmelder: PF-Schweißtechnologie GmbH, 36304 Alsfeld (DE)
(72) Erfinder: Spychalski-Merle, Achim, 36304 Alsfeld (DE)
(74) Vertreter: Eisenführ Speiser

(57) **Zusammenfassung**

Die Erfindung betrifft ein Schälgerät (S) zum zumindest teilweise Abtragen der Oberfläche eines wenigstens annähernd rohrförmigen Körpers (R) mit einer Mittelachse (MR), insbesondere eines Kunststoffrohrs, aufweisend: eine Spannbaugruppe (10; 310; 410; 510) mit einer Mittelachse (MS) und wenigstens einem Spannelement (14, 314, 414, 514) zum Verspannen des Schälgeräts (S) an dem rohrförmigen Körper (R), eine Schälbaugruppe (20) mit einer Schälarmeinheit (30, 130, 230), einer an einem ersten Ende (30a, 130a, 230a) der Schälarmeinheit (30) angeordneten Schälmesseranordnung (40, 140) und einem Schälarmträger (60, 160), der die Spannbaugruppe (10; 310; 410; 510) mit der Schälarmeinheit (30, 130, 230) verbindet. Die Schälarmeinheit (30, 130, 230) ist mit ihren ersten und zweiten Enden (30a, 130a, 230a; 30b, 130b, 230b) derart mit der Schälmesseranordnung (40, 140) und dem Schälarmträger (60, 160) verbunden und in der gemeinsamen Ebene mit der Mittelachse (MS) der Spannbaugruppe (10; 310; 410; 510) verschwenkbar, dass die Schälmesseranordnung (40, 140) in jeder Schwenkposition der Schälarmeinheit (30, 130, 230) ihre Ausrichtung zur Mittelachse (MS) der Spannbaugruppe (10, 310, 410, 510) beibehält. Die Erfindung betrifft weiterhin ein Spannbaugruppe (10; 110; 210; 310) als Werkzeugträger für ein Werkzeug, wie ein Schälwerkzeug, zur Bearbeitung eines annähernd rohrförmigen Körpers (R) mit einer Mittelachse (MR), insbesondere eines Kunststoffrohres, aufweisend eine Mittelachse (MS), eine koaxial zur Mittelachse (MS) der Spannbaugruppe (10, 310, 410, 510) angeordneten Trägerwelle (12, 312, 412, 512), und wenigstens eine, auf der Trägerwelle (12, 312, 412, 512) angeordneten, und im Wesentlichen radial nach außen gerichteten Spanneinrichtung (13, 14; 313, 314; 413, 414; 513, 514).

## Beschreibung

Die vorliegende Erfindung betrifft ein Schälgerät zum zumindest teilweise Abtragen der Oberfläche eines zumindest annähernd rohrförmigen Körpers sowie eine Spannbaugruppe als Werkzeugträger für ein Werkzeug, wie eine Schälmesseranordnung eines Schälgeräts, zur Bearbeitung eines annähernd rohrförmigen Körpers.

Insbesondere betrifft die vorliegende Erfindung ein Schälgerät zum zumindest teilweise Abtragen der Oberfläche eines zumindest annähernd rohrförmigen Körpers mit einer Mittelachse, insbesondere eines Kunststoffrohrs, mit einer Spannbaugruppe aufweisend eine Mittelachse und wenigstens ein Spannelement zum Verspannen des Schälgeräts an dem rohrförmigen Körper, wobei im montierten Zustand, die Mittelachse der Spannbaugruppe zumindest annähernd mit der Mittelachse des rohrförmigen Körpers zusammenfällt, und mit einer Schälbaugruppe aufweisend eine Schälarmeinheit, eine an einem ersten Ende der Schälarmeinheit angeordnete Schälmesseranordnung und einen Schälarmträger, der die Spannbaugruppe mit der Schälarmeinheit verbindet, wobei die Schälarmeinheit mit einem zweiten Ende mit dem Schälarmträger derart verbunden ist, dass die Schälarmeinheit und die Mittelachse der Spannbaugruppe in einer gemeinsame Ebene liegen, wobei die Schälmesseranordnung ein Schälmesser aufweist.

Die vorliegende Erfindung betrifft ferner eine Spannbaugruppe als Werkzeugträger für ein Werkzeug, wie eine Schälmesseranordnung eines Schälgeräts, zur Bearbeitung eines annähernd rohrförmigen Körpers mit einer Mittelachse, insbesondere eines Kunststoffrohres. Die Spannbaugruppe weist eine Mittelachse, eine koaxial zur Mittelachse der Spannbaugruppe angeordneten Trägerwelle und wenigstens eine, auf der Trägerwelle angeordneten, und im Wesentlichen radial nach au-βen gerichteten Spanneinrichtung auf.

Zum Aufbau von Netzen für die Versorgung von Verbrauchern mit beispielsweise Wasser oder Gase ist es in der Praxis bekannt, hierzu Kunststoffrohre zu verwenden. Zur Erstellung eines Netzes, bei dem große Distanzen zu überbrücken sind und/oder das eine Vielzahl an Abzweigungen aufweist, werden die Kunststoffrohre an ihren Enden miteinander oder mit anderen Formteilen, wie T- oder Kreuzstücken, beispielsweise über Heizwendelfittinge im Wege einer Heizwendelverschweißung verbunden. Um eine dichte Verschweißung sicherzustellen, wird die Außenoberflächen der Kunststoffrohre an denjenigen Stellen, an denen eine Verschweißung mit einem Formteil oder dgl. erfolgen soll, vor der eigentlichen Verschweißung geringfügig abgetragen.

Dabei ist zu berücksichtigen, dass Kunststoffrohre, bzw. deren Enden, nicht immer exakt zylindrisch sind, sondern Ovalitäten aufweisen können. Zudem kann die Oberfläche solcher Kunststoffrohre weitere Unebenheiten, wie Kratzer oder Riefen, oder chemische Veränderungen, wie Oxidation oder Kontamination, aufweisen, die eine sichere und/oder mediendichte Verbindung zwischen dem rohrförmigen Körper und dem darauf aufgesetzten Formstück verhindern können, oder zumindest die Qualität dieser Verbindung beeinträchtigen. Es ist daher üblich, die Abschnitte des rohrförmigen Körpers, auf denen ein solches Formstück aufgesetzt werden soll, mittels eines Schälgeräts zu bearbeiten, um solche Unebenheiten oder Veränderungen in der rohrförmigen Körperoberfläche zu beseitigen.

Aus dem EP-Patent 0 217 704 ist ein Schälgerät zum Abschaben der Außenfläche eines Kunststoffrohrs bekannt, welches mittels Klemmarmen in einem Ende des zu bearbeitenden Kunststoffrohres bzw. rohrförmigen Körpers verspannt wird. Ein Arm, der an seinem freien Ende eine Schaberklinge trägt, ist parallel zur Oberfläche des rohrförmigen Körpers so ausgerichtet, dass die Schaberklinge auf dem rohrförmigen Körper aufliegt. Das andere Ende des Arms ist mit einer Antriebsspindel verbunden, sodass der Arm um den rohrförmigen Körper rotierend angetrieben werden kann, wobei die Schaberklinge Material von der Oberfläche des rohrförmigen Körpers abträgt.

Andere bekannte Schälgeräte zum Abtragen von Material von der Oberfläche eines Kunststoffrohrs sind im wesentlichen C-förmig ausgebildet und weisen eine zu ihrer Innenseite gerichtete Schaberklinge auf. Ein solches Schälgerät ist aus der EP-Patentanmeldung 1 160 035 bekannt. Es weist neben der Schaberklinge Rollen an seiner Innenseite auf, mittels der das Schälgerät auf der Oberfläche des zu bearbeitenden rohrförmigen Körpers entlang rollen kann, während die Schaberklinge Material von der Rohroberfläche abträgt.

Nachteilig an diesen bekannten Vorrichtungen ist, dass bei nicht exakt zylindrischen rohrförmigen Körpern nur unzureichend oder kein Material abgetragen wird, da die Schaberklingen aufgrund der Ovalität des rohrförmigen Körpers abheben oder nicht mit ausreichendem Druck anliegen, um einen gewünschten Materialabtrag zu gewährleisten. Auch ist eine exakte Positionierung der Bearbeitungswerkzeuge zu dem zu bearbeitenden Abschnitt des rohrförmigen Körpers nicht in jedem Fall möglich, was aber für eine qualitativ hochwertige Bearbeitung des rohrförmigen Körpers notwendig ist. Insgesamt besteht hier die Gefahr, dass der bearbeitete Bereich nur unzureichend geglättet wird, oder dass kein ausreichender Materialabtrag erzielt wird, was einer qualitativ hochwertigen Verbindung zwischen dem rohrförmigen Körper und dem Formstück entgegenstehen kann.

Es ist daher die Aufgabe der vorliegenden Erfindung, ein Schälgerät bereitzustellen, das die vorstehend genannten Nachteile überwindet, und eine Bearbeitung eines zylindrischen Körpers, wie eines Kunststoffrohrs, in einer Weise ermöglicht, dass eine qualitativ hochwertige Verbindung zwischen dem rohrförmigen Körper und dem Formstück entsteht. Es ist weiterhin Aufgabe der vorliegenden Erfindung, einen Werkzeugträger, wie eine Spannbaugruppe, bereitzustellen, die eine exakte Positionierung eines an dem Werkzeugträger befestigten Bearbeitungswerkzeugs relativ zu dem zu bearbeitenden rohrförmigen Körper ermöglicht.

Diese Aufgaben werden durch ein Schälgerät sowie eine Spannbaugruppe als Werkzeugträger für ein Werkzeug, wie eine Schälmesseranordnung eines Schälgeräts entsprechend der vorliegenden Erfindung gelöst. Vorteilhafte Ausgestaltungen mit zweckmäßigen Weiterbildungen sind in den davon abhängigen Ansprüchen angegeben.

Erfindungsgemäß wird ein Schälgerät vorgeschlagen, zum zumindest teilweise Abtragen der Oberfläche eines wenigstens annähernd rohrförmigen Körpers mit einer Mittelachse, insbesondere eines Kunststoffrohrs, mit einer Spannbaugruppe aufweisend eine Mittelachse und wenigstens ein Spannelement zum Verspannen des Schälgeräts an dem rohrförmigen Körper, wobei im montierten Zustand die Mittelachse der Spannbaugruppe zumindest annähernd mit der Mittelachse des rohrförmigen Körpers zusammenfällt, und mit einer Schälbaugruppe aufweisend eine Schälarmeinheit, eine an einem ersten Ende der Schälarmeinheit angeordnete Schälmesseranordnung und einen Schälarmträger mit einem ersten Ende und einem zweiten Ende, der die Spannbaugruppe mit der Schälarmeinheit verbindet, wobei die Schälarmeinheit mit einem zweiten Ende mit dem Schälarmträger derart verbunden ist, dass die Schälarmeinheit und die Mittelachse der Spannbaugruppe im montierten Zustand in einer gemeinsame Ebene liegen. Die Schälmesseranordnung weist ein Schälmesser auf, das an einem ersten Ende der Schälarmeinheit angeordnet ist.

Weiterhin ist erfindungsgemäß vorgesehen, dass die Schälarmeinheit mit ihren ersten und zweiten Enden derart mit der Schälmesseranordnung und dem Schälarmträger verbunden und in der gemeinsamen Ebene mit der Mittelachse der Spannbaugruppe verschwenkbar ist, dass der Messerwagen in jeder Schwenkposition der Schälarmeinheit seine Ausrichtung zur Mittelachse der Spannbaugruppe beibehält.

Hierdurch kann sichergestellt werden, dass ein Schälmesser einer Schälmesseranordnung zu jedem Bearbeitungszeitpunkt seine Ausrichtung zu dem zu bearbeitenden rohrförmigen Körper beibehält, wodurch ein gleichmäßiger Materialabtrag und eine hohe Oberflächenqualität gewährleistet werden können.

Die Schälmesseranordnung kann dabei auf unterschiedliche Weise gestaltet sein. In einer vorteilhaften Ausgestaltung weist die Schälmesseranordnung einen Messerwagen mit einem darin bzw. daran angeordneten Schälmesser auf, der am Ende der Schälarmeinheit angeordnet ist. Ein solcher Messerwagen kann eine exakte Führung des Schälmessers gewährleisten.

Dabei können die Schwenkachsen auf unterschiedliche Weise realisiert werden. In einer Ausführung kann vorgesehen sein, dass die Schwenkachsen durch Gelenkbolzen gebildet werden, die in entsprechenden Bohrungen aufgenommen sind.

In einer bevorzugten Ausgestaltung kann vorgesehen sein, das die Schälarmeinheit wenigstens zueinander parallel angeordnete erste und zweite Schälarmelemente mit ersten und zweiten Enden aufweist, die schwenkbar mit der Schälmesseranordnung und dem Schälarmträger verbunden sind, mit senkrecht zur gemeinsamen Ebene der Schälarmeinheit und der Mittelachse der Spannbaugruppe ausgerichteten Schwenkachsen.

Diese Ausgestaltung ermöglicht es der Schälmesseranordnung bzw. dem Messerwagen, Ovalitäten des zu bearbeitenden rohrförmigen Körpers auszugleichen und sich gleichzeitig dem reduzierten bzw. sich reduzierenden Durchmesser des bearbeiteten rohrförmigen Körpers anzupassen. Die Ausrichtung der Schälmesseranordnung bzw. des Messerwagens, und somit die Ausrichtung des Schälmessers, zur rohrförmigen Körperachse bleibt dabei erhalten.

Weiterhin ist es von Vorteil, wenn die Schälarmelemente in radialer Richtung, bezogen auf die Mittelachse der Spannbaugruppe, übereinander angeordnet sind, wodurch deine Bewegung des Messerwagens ausschließlich in der gemeinsamen Ebene der Schälarmeinheit und der Mittelachse der Spannbaugruppe sichergestellt werden kann.

In einer vorteilhaften Ausgestaltung der erfindungsgemäßen Schäleinheit ist vorgesehen, dass die Abstände der Schwenkachsen in radialer Richtung, bezogen auf die Mittelachse der Spannbaugruppe und in axialer Richtung, bezogen auf die Mittelachse der Spannbaugruppe, gleich groß sind, sodass die Schwenkachsen in der gemeinsamen Ebene der Schälarmeinheit und der Mittelachse der Spannbaugruppe die Eckpunkte eines Parallelogramms bilden. Hierdurch wird die gewünschte Bewegung der Schälmesseranordnung relativ zu dem rohrförmigen Körper erreicht.

In einer weiterhin vorteilhaften Ausgestaltung der Schälarm-einheit kann erfindungsgemäß vorgesehen sein, dass die Abstände der Schwenkachsen in radialer Richtung, bezogen auf die Mittelachse der Spannbaugruppe, gleich groß sind, aber in axialer Richtung, bezogen auf die Mittelachse der Spannbaugruppe, unterschiedlich groß sind. Entsprechend der jeweiligen Ausgestaltungen der Schälbaugruppe kann hierdurch eine gewünschte Bewegung der Schälmesseranordnung relativ zu dem rohrförmigen Körper erreicht.

Weiterhin kann vorgesehen sein, dass wenigstens eine der an einem der zweiten Enden der Schälarmelemente angebrachten Bohrungen zur Aufnahme der die Schwenkachsen bildenden Gelenkbolzen einen vom Querschnitt des Gelenkbolzens abweichenden, größeren Querschnitt hat. Hierdurch wird eine zusätzliche Verschwenkbarkeit der Schälmesseranordnung erreicht, um die Ausrichtung des Schälmessers zu dem zu bearbeiteten rohrförmigen Körper weiter zu verbessern.

Der Querschnitt der den Gelenkbolzen aufnehmenden Bohrung kann bspw. die Form eines Langlochs haben, oder eine Bohrung mit einem größeren Durchmesser als dem Durchmesser des Gelenkbolzens sein. Der Querschnitt der Bohrung kann aber auch jede andere Form aufweisen, solange hierdurch eine zusätzliche Verschwenkbarkeit der Schälmesseranordnung erreicht werden kann.

Um eine gewünschte Schwenkbewegung zu erreichen, kann das Langloch unterschiedlich gestaltet sein. In einer bevorzugten Ausführung ist das Langloch bogen- oder teilkreisförmig gestaltet. Alternativ oder ergänzend hierzu kann ebenfalls vorgesehen sein, den Durchmesser einer der Bohrungen größer zu wählen als den Durchmesser des darin aufgenommenen Gelenkbolzens.

Der durch diese zusätzliche Kippbarkeit der Schälmesseranordnung erreichbare Kippwinkel kann zwischen 0,5° bis 20°, vorzugsweise 2,5° bis 12,5°, weiter vorzugsweise 3° und 7°, besonders bevorzugt ca. 5° betragen.

In vorteilhafter Weise kann weiterhin vorgesehen sein, dass zwischen den zweiten Enden der Schälarmelemente und der Schälmesseranordnung ein Trägerelement angeordnet ist. Ein solches Trägerelement ermöglicht eine gezielte Ausrichtung der Schälmesseranordnung zu den Schälarmelementen.

In einer einfachen Ausführung umfasst die Schälmesseanordnung das Schälmesser sowie die zugehörigen Befestigungselemente und, soweit notwendig, Ausrichtelemente, die unmittelbar an dem Trägerelement angeordnet sind. Umfasst die Schälmesseanordnung einen Messerwagen, ist dieser an dem Trägerelement befestigt.

Zur Anordnung der Schälarmelemente kann weiterhin vorgesehen sein, dass die zweiten Enden der ersten und zweiten Schälarmelemente zumindest annähernd C-förmig ausgebildet sind und das Trägerelement zumindest teilweise umgreifen. Diese Ausgestaltung ermöglicht das Anbringen der Gelenkbolzen im Bereich der C-förmigen Enden, womit neben der gewünschten Schwenkbarkeit auch eine Führung der Schälarmelemente in der Schwenkebene erreicht wird.

Es kann weiterhin vorgesehen sein, dass das erste Ende des ersten Schälarmelements zumindest annähernd C-förmig ausgebildet ist und den Schälarmträger zumindest teilweise umgreift, um auch hier eine Führung in der Schwenkebene der Schälarmeinheit zu gewährleisten.

Darüber hinaus kann in einer vorteilhaften Ausgestaltung das erste Ende des zweiten Schälarmelements eine Durchbrechung aufweisen, in die Schälarmträger mit seinem ersten Ende hineinragt. Hierdurch wird die Schwenkbarkeit und Führung des zweiten Schälarmelements in seiner Schwenkebene sichergestellt.

In einer alternativen Ausgestaltung kann vorgesehen sein, dass das Trägerelement seitlich neben den zweiten Enden des ersten und zweiten Schälarmelements angeordnet ist.

Zur schwenkbaren Anordnung des ersten und zweiten Schälarmelements am Schälarmträger ist es ebenfalls möglich, dass die ersten Enden des ersten und zweiten Schälarmelements in einer Ausnehmung am zweiten Ende des Schälarmträgers aufgenommen und in dieser mittels der Gelenkbolzen schwenkbar gehalten sind.

In einer vorteilhaften Ausführung kann weiterhin vorgesehen sein, dass das Schälgerät eine Kraftbeaufschlagungseinheit umfasst, die eine Auslenkkraft auf die Schälarmeinheit ausübt, zum reversiblen Vorspannen der Schälarmeinheit in einer Schälposition, in eine Richtung in der gemeinsamen Ebene der Schälarmeinheit und der Mittelachse der Spannbaugruppe.

Durch ein solches Vorspannen liegt der Messerwagen stets an der Rohroberfläche an. Ein Abheben des Schälmessers von der Rohroberfläche wird verhindert, sodass ein Materialabtrag stattfinden kann, um beispielsweise Kratzer oder Riefen in der Rohroberfläche zu reduzieren oder zu beseitigen.

Ein Vorspannen des Schälmessers kann auf unterschiedliche Weise erfolgen. Erfindungsgemäß kann vorgesehen sein, dass die Kraftbeaufschlagungseinheit zum Erzeugen der Auslenkkraft wenigstens ein elastisches Element, wie eine Feder, aufweist. Ein elastisches Element stellt eine technisch einfache Möglichkeit zum Erzeugen einer Vorspannung dar. Alternativ hierzu besteht die Möglichkeit, eine Vorspannung durch andere Mittel zu erzeugen, wie beispielsweise pneumatische oder hydraulische Kolben-Zylinderanordnungen.

Weiterhin kann erfindungsgemäß vorgesehen sein, dass die Kraftbeaufschlagungseinheit einen Einstellmechanismus zum Einstellen der Höhe der Auslenckraft aufweist. Durch das Einstellen der Höhe der Auslenkkraft kann sichergestellt werden, dass auch bei größeren Ovalitäten des rohrförmigen Körpers, der Messerwagen auf der Rohroberfläche aufsitzt.

Der Einstellmechanismus kann auf unterschiedliche Weise betätigt werden. In einer vorteilhaften Ausführung ist vorgesehen, dass der Einstellmechanismus einen Spannhebel umfasst. Selbstverständlich können auch andere Betätigungselemente verwendet werden, wie Stellschrauben oder Ähnliches.

Zum Erzeugen der Auslenkkraft kann weiterhin vorgesehen sein, dass der Spannhebel einen Exzenternocken aufweist, und so um eine Drehachse schwenkbar ist, dass das elastische Element dabei komprimiert wird, wobei die Auslenkkraft erzeugt wird, oder entlastet wird.

In einer bevorzugten Ausgestaltung des erfindungsgemäßen Schälgeräts weist der Einstellmechanismus eine entlang des Schälarmträgers reversibel verschiebbare Druckplatte auf, wobei das elastische Element zwischen der Druckplatte und einem Abschnitt der Schälarmeinheit angeordnet ist. Durch das Verschieben der Druckplatte relativ zu dem Abschnitt der Schälarmeinheit kann das dazwischen befindliche elastische Element unter Spannung gesetzt werden, um eine gewünschte Vorspannung, mit der der Messerwagen auf der Rohroberfläche aufsitzt einzustellen.

Die Druckplatte kann unmittelbar von Hand durch den Bediener entlang des Schälarmträgers verschoben werden. Dies geschieht vorzugsweise im unbelasteten Zustand der Schälarmeinheit. Dabei wird die Druckplatte im kraftlosen Zustand eingestellt sowie geklemmt. Durch anschließendes Ausrichten der Schälarmeinheit in die Schälposition kann die Vorspannung auf den gewünschten Wert eingestellt bzw. ggf. weiter erhöht werden.

Alternativ oder zusätzlich hierzu kann ein Hebel mit einem Exzentermechanismus, wie der Spannhebel mit seinem Exzenternocken, vorgesehen sein, um das elastische Element unter Spannung zu setzen. Der Exzentermechanismus kann dabei so ausgestaltet sein, dass er beim Verschwenken um die Drehachse auf die entlang des Schälarmträgers reversibel verschiebbare Druckplatte wirkt.

In einer weiteren alternativen Ausgestaltung kann vorgesehen sein, dass der Einstellmechanismus zum Einstellen der Höhe der Auslenkkraft einen Stellschraubenmechanismus umfasst. Dieser kann eine von Hand betätigte Stellschraube beinhalten, wodurch die Bedienung des Einstellmechanismus weiter vereinfacht wird.

In einer weiteren Ausführung kann vorgesehen sein, dass anstelle des als Stellschraubenmechanismus gestalteten Einstellmechanismus zum Einstellen der Höhe der Auslenkkraft, ein Stopper oder Anschlag vorgesehen ist, der die Auslenkung der Schälarmeinheit begrenzt. In einer solchen Ausgestaltung kann ebenfalls ein elastisches Element vorgesehen sein, welches in einen durch den Anschlag vorgegebenen Zustand komprimiert ist, woraus sich ein fest eingestellter Wert einer Auslenkkraft ergibt. Ein solcher Anschlag kann in Form einer Schraube realisiert sein, die so angeordnet ist, dass die Schälarmeinheit oder ein Element hiervon mit dem Schraubenkopf in Anlage kommt. Als Anschlag eignen sich aber auch andere Elemente, wie ein Stift oder ein Bolzen.

Ist darüber hinaus das im Messerwagen angeordnete Schälmesser in eine Richtung senkrecht zur Mittelachse der Spannbaugruppe vorgespannt, kann hierdurch ein gleichmäßiger Materialabtrag sichergestellt werden.

Bei dem erfindungsgemäßen Schälgerät kann weiterhin vorgesehen sein, dass der Messerwagen wenigstens zwei zumindest annähernd achsparallel zur Mittelachse der Spannbaugruppe angeordnete Laufrollen aufweist, die im montierten Zustand des Schälgeräts auf der Oberfläche des rohrförmigen Körpers aufliegen. Die Laufrollen oder Räder, ermöglichen nicht nur eine reibungsfreie und gleichmäßige Führung des Messerwagens über die Rohroberfläche, sondern halten ebenfalls den Messerwagen in einem konstanten Abstand zur Rohroberfläche.

Zur Anpassung des erfindungsgemäßen Schälgeräts an rohrförmigen Körpern unterschiedlichen Durchmessers oder unterschiedlicher Wanddicken kann erfindungsgemäß weiterhin vorgesehen sein, dass der Abstand der Schälarmeinheit zur Mittelachse der Spannbaugruppe einstellbar ist.

Die Einstellung des Abstandes der Schälarmeinheit zur Mittelachse der Spannbaugruppe kann auf unterschiedliche Weise erfolgen. Bevorzugt ist eine Ausführung, in der der Schälarmträger entlang der Spannbaugruppe und zumindest annähernd senkrecht zu deren Mittelachse verschiebbar ist.

Alternativ kann vorgesehen sein, dass die Schälarmeinheit entlang des Schälarmträgers verschiebbar und an diesem in den unterschiedlichen Positionen entsprechend fixierbar ausgestaltet ist.

In einer weiterhin erfindungsgemäßen Ausgestaltung kann vorgesehen sein, dass die Position des Schälarmträger entlang der Mittelachse der Spannbaugruppe einstellbar ist. Hierdurch kann die Rohroberfläche in axialer Richtung auf einer gewünschten Länge bearbeitet werden, ohne die Verspannung des Schälgeräts an dem rohrförmigen Körper zu lösen.

Dabei kann vorgesehen sein, die Position des Schälarmträgers entlang der Mittelachse der Spannbaugruppe schrittweise, beispielsweise nach jeder Umdrehung der Schälarmeinheit um das rohrförmigen Körper, oder kontinuierlich zu verändern. Ein hierfür vorgesehener Einstellenmechanismus kann beispielsweise eine Spannvorrichtung für den Schälarmträger an der Mittelachse der Spannbaugruppe beinhalten, oder einen Spindelmechanismus, mittels dem der Schälarmträger, und damit die Schälbaugruppe, bei jeder Umdrehung um den rohrförmigen Körper um einen bestimmten Weg entlang der Mittelachse der Spannvorrichtung verschoben wird.

Zur Fixierung des Schälgeräts an dem zu bearbeitenden rohrförmigen Körper kann es ausreichend sein, dass die Spannbaugruppe lediglich ein Spannelement umfasst. Um aber eine positionsgenaue Fixierung des Schälgeräts, vorzugsweise koaxial zu dem rohrförmigen Körper zu erreichen, ist vorgesehen, dass die Spannbaugruppe mehr als ein Spannelement, vorzugsweise drei Spannelemente, aufweist, vorzugsweise in Form von Spannscheren.

In vorteilhafter Weise sind die Spannelemente in gleicher Winkelteilung zueinander angeordnet, um eine mittige Anbringung der Spannbaugruppe in dem rohrförmigen Körper zu unterstützen. Sind drei Spannelemente vorgesehen, sind diese in einem Winkel von 120° zueinander angeordnet.

Zur Erleichterung des Anbringens und Abnehmens des Schälgeräts an und von dem rohrförmigen Körper, ist erfindungsgemäß weiterhin vorgesehen, dass in unmittelbarer Nähe zur Mittelachse der Spannbaugruppe und zwischen zwei benachbarten Spannelementen ein Halteelement angeordnet ist. Ein solches Halteelement kann beispielsweise als Griff in der Form eines Metallstabes ausgeführt sein, oder durch ein geeignetes Gurtband oder eine Gurtschlaufe gebildet sein, wobei das Halteelement so an der Spannbaugruppe befestigt sein sollte, dass die Funktion der Spannbaugruppen nicht beeinträchtigt wird.

Weiter entsprechend der vorliegenden Erfindung wird zur Lösung der vorstehend genannten Aufgabe eine Spannbaugruppe als Werkzeugträger für ein Werkzeug, wie eine Schälmesseranordnung eines Schälgeräts, vorgeschlagen, zur Bearbeitung eines annähernd rohrförmigen Körpers mit einer Mittelachse, insbesondere eines Kunststoffrohres. Der Werkzeugträger bzw. die Spannbaugruppe weist eine Mittelachse, eine koaxial zur Mittelachse der Spannbaugruppe angeordneten Trägerwelle und wenigstens eine, auf der Trägerwelle angeordneten, und im Wesentlichen radial nach außen gerichteten Spanneinrichtung auf. Erfindungsgemäß ist auf der Trägerwelle ein Betätigungsmechanismus zum Betätigen der wenigstens einen Spanneinrichtung angeordnet, zum reversiblen Verspannen der Spannbaugruppe in dem rohrförmigen Körper koaxial zu dessen Mittelachse. Hierdurch wird ein kompaktes Design sowie eine leichte Bedienung des Werkzeugträgers bzw. der Spannbaugruppe ermöglicht.

Die erfindungsgemäße Spannbaugruppe eignet sich als Werkzeugträger für unterschiedliche zur Bearbeitung eines rohrförmigen Körpers oder dgl. vorgesehene Werkzeuge, die in einer bestimmten Ausrichtung zu dem rohrförmigen Körper angeordnet werden. Hierzu kann die erfindungsgemäße Spannbaugruppe koaxial zur Mittelachse des zu bearbeitenden rohrförmigen Körpers, und vorzugsweise in diesem angeordnet werden. Insbesondere ist dies von Vorteil, wenn eine zumindest annähernd kreisförmige Bewegung bezüglich der Mittelachse des rohrförmigen Körpers auszuführen ist, wie beispielsweise ein Schälwerkzeug, ein Rohrschneider, ein Gewindeschneider oder Ähnliche.

Bevorzugt umfasst die wenigstens eine Spanneinrichtung wenigstens eine Spannschere mit wenigstens zwei gelenkig miteinander verbundenen Scherenelementen, sowie wenigstens ein auf der Trägerwelle verschiebbar angeordnetes Spannelement, mit dem eines der wenigstens zwei Scherenelemente der wenigstens einen Spannschere gelenkig verbunden ist, und das zur Betätigung der Spanneinrichtung durch den Betätigungsmechanismus auf der Trägerwelle reversibel verschiebbar ist.

Die Trägerwelle kann unterschiedlich ausgestaltet sein. So kann sie als Vollwelle oder als Hohlwelle vorgesehen sein. Ist die Trägerwelle als Hohlwelle gestaltet, ist es möglich, bspw. eine Spindel, wie eine Gewindespindel, durch diese Hohlwelle zu führen, an der das Bearbeitungswerkzeug befestigt und um die Mittelachse der Spannbaugruppe rotierbar gehalten werden kann.

In einer bevorzugten Ausführung umfasst der Betätigungsmechanismus eine Gewindeverbindung bzw. Gewindeeingriff zwischen der Trägerwelle und dem wenigstens einen Spannelement sowie ein Betätigungselement. Dabei kann vorgesehen sein, dass die Trägerwelle ein Außengewinde aufweist, das mit einem Innengewinde des wenigstens einen Spannelements zusammenwirkt.

Das Betätigungselement kann in dieser Ausführung in Form einer Mutter oder eines Hebels ausgestaltet sein, sodass der Betätigungsmechanismus auf einfache Weise, beispielsweise mit einem Schraubenschlüssel oder von Hand bedient werden kann. Ebenfalls ist auch ein motorischer Antrieb für diesen Betätigungsmechanismus denkbar.

In einer alternativen Ausführung kann der der Betätigungsmechanismus wenigstens einen koaxial auf der Trägerwelle angeordneten Kolben-Zylinder-Mechanismus umfassen, der mit dem wenigstens einen Spannelement zusammenwirkt. Hierdurch wird die Bedienung des Betätigungsmechanismus weiter erleichtert.

Um einen solchen Kolben-Zylinder-Mechanismus zu realisieren, kann vorgesehen sein, dass ein ringförmige Zylinderraum zwischen der Trägerwelle und einer koaxial auf der Trägerwelle angeordneten Zylinderhülse gebildet ist, in der ein ringförmiger Kolben angeordnet ist.

In einer bevorzugten Ausführung ist vorgesehen, dass die Zylinderhülse durch den Betätigungsmechanismus reversibel auf der Trägerwelle verschiebbar ist. In diesem Fall ist das wenigstens eine Spannelement mit der Zylinderhülse verbunden, und wird durch diese reversibel auf der Trägerwelle verschoben.

Selbstverständlich ist es möglich, die Zylinderhülse fest auf der Trägerwelle anzuordnen, sodass der ringförmige Kolben in dem ringförmigen Zylinderraum verschiebbar ist. In dieser Ausführung ist der ringförmige Kolben mit dem wenigstens einen Spannelement verbunden, um dieses auf der Trägerwelle zu verschieben.

Zur Aktivierung des Betätigungsmechanismus kann weiterhin vorgesehen sein, dass der wenigstens eine Kolben-Zylinder-Mechanismus mit einer externen Fluidquelle verbunden ist. Bei einer solchen Fluidquelle kann es sich um eine hydraulische oder pneumatische Pumpe handeln, die ein entsprechendes Fluid, wie Hydrauliköl oder Luft, in den Kolben-Zylinder-Mechanismus pumpt.

In einer weiterhin vorteilhaften Ausgestaltung der erfindungsgemäßen Spannbaugruppe kann vorgesehen sein, dass diese ein zweites, auf der Trägerwelle verschiebbar angeordnetes Spannelement aufweist, welches mit dem zweiten der wenigstens zwei Scherenelement der Spannscheren gelenkig verbunden ist, und einen weiteren mit dem zweiten Spannelement verbundenen Kolben-Zylinder-Mechanismus umfasst.

Dieser weitere Kolben-Zylinder-Mechanismus entspricht in seinem Aufbau vorzugsweise dem erste Kolben-Zylinder-Mechanismus, und kann mit der gleichen Fluidquelle verbunden sein. Dabei ist es weiterhin möglich, beide Kolben-Zylinder-Mechanismen getrennt voneinander anzusteuern, oder die Kolben-Zylinder-Mechanismen synchron anzusteuern.

In einer alternativen Ausgestaltung kann vorgesehen sein, dass der Betätigungsmechanismus einen integrierten Antriebsmechanismus aufweist, wodurch ein besonders kompakter Aufbau und eine weiter erleichterte Bedienung der Spannbaugruppe erreicht wird.

Der integrierte Antriebsmechanismus kann ein ebenfalls integriertes Fluidreservoir aufweisen zur Aufnahme eines Fluids, wie beispielsweise Hydrauliköl. Hierdurch ist die Spannbaugruppe unabhängig von einer externen Fluidquelle oder einer Fluidzuführung.

Das Fluidreservoir kann auf unterschiedliche Weise realisiert werden. Im einfachsten Fall handelt es sich um einen entsprechenden Behälter, der bspw. an der Trägerwelle befestigt werden kann.

In einer bevorzugten Ausführung kann die Spannbaugruppe mit einer koaxial auf der Zylinderhülse angeordneten weiteren Zylinderhülse zur Bildung eines integrierte Fluidreservoirs zwischen der Zylinderhülse und der weiteren Zylinderhülse versehen sein.

Die weitere Zylinderhülse zur Bildung des Fluidreservoirs kann als separates Element vorgesehen sein. In einer bevorzugten Ausführung der erfindungsgemäßen Spannbaugruppe ist vorgesehen, dass diese ein koaxial auf der Trägerwelle angeordnetes Anschlusselement aufweist, welches neben anderen Elementen auch die weitere Zylinderhülse umfasst. Hierdurch wird ein hoher Integrationsgrad sowie ein zuverlässiger Betrieb der erfindungsgemäßen Spannbaugruppe erreicht.

In einer vorteilhaften Ausgestaltung kann die Spannbaugruppe einen integrierten Pumpmechanismus zum Überführen des Fluids aus dem Fluidreservoir in den Zylinderraum des Kolben-Zylinder-Mechanismus umfassen mit einem in der weiteren Zylinderhülse integrierten Pumpenzylinder und einem darin geführten Pumpenkolben.

Der Antrieb des integrierten Pumpmechanismus kann unterschiedlich ausgestaltet sein, beispielsweise in Form eines elektrischen Antriebs. In einer bevorzugten Ausführung umfasst der integrierte Pumpmechanismus einen Hebel zur manuellen Betätigung des Pumpmechanismus.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels ggfs. verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1: eine schematische, perspektivische Darstellung eines ersten Ausführungsbeispiels eines Schälgeräts entsprechend der vorliegenden Erfindung;
- Fig. 2: eine vergrößerte perspektivische Darstellung einer Schälbaugruppe des Schälgeräts nach Fig. 1;
- Fig. 3: eine schematische, perspektivische Darstellung eines zweiten Ausführungsbeispiels eines Schälgeräts entsprechend der vorliegenden Erfindung mit einer Schälbaugruppe im nicht vorgespannten Zustand;
- Fig. 4: eine schematische, perspektivische Darstellung des Schälgeräts nach Fig. 3 mit der Schälbaugruppe im vorgespannten Zustand;
- Fig. 5: eine vergrößerte perspektivische Darstellung der Schälbaugruppe des Schälgeräts nach Fig. 4; und
- Fig. 6: eine schematische, perspektivische Darstellung eines dritten Ausführungsbeispiels eines Schälgeräts entsprechend der vorliegenden Erfindung;
- Fig. 6a: eine vergrößerte Darstellung einer ersten Ausführungsform eines Trägerelements des Schälgeräts nach Fig. 6;
- Fig. 6b: eine vergrößerte Darstellung einer zweiten Ausführungsform eines Trägerelements des Schälgeräts nach Fig. 6;
- Fig. 7: eine schematische, perspektivische Darstellung eines vierten Ausführungsbeispiels eines Schälgeräts entsprechend der vorliegenden Erfindung;
- Fig. 7a: eine vergrößerte Darstellung des Trägerelements des Schälgeräts nach Fig. 7;
- Fig. 8: eine schematische, perspektivische Darstellung eines ersten Ausführungsbeispiels einer Spannbaugruppe für das erfindungsgemäße Schälgerät entsprechend der Ausführungsbeispiele der Fig. 1 und 3, wobei die Spannbaugruppe im Transportzustand, d.h. im zusammengefalteten Zustand gezeigt ist;
- Fig. 9: eine Schnittdarstellung eines zweiten Ausführungsbeispiels einer erfindungsgemäßen Spannbaugruppe in einer Ebene durch deren Mittelachse;
- Fig. 10: eine Schnittdarstellung eines dritten Ausführungsbeispiels einer erfindungsgemäßen Spannbaugruppe in einer Ebene durch deren Mittelachse;
- Fig. 11: eine Schnittdarstellung eines vierten Ausführungsbeispiels einer erfindungsgemäßen Spannbaugruppe in einer Ebene durch deren Mittelachse;
- Fig. 12: eine vergrößerte Darstellung des Betätigungsmechanismus der Spannbaugruppe nach Fig. 11;
- Fig. 13: eine schematische, perspektivische Darstellung der Spannbaugruppe nach Fig. 11; und
- Fig. 14: eine schematische, perspektivische Darstellung eines Schälgeräts mit einer Schälbaugruppe nach Fig. 3 und einer Spannbaugruppe nach Fig. 9.

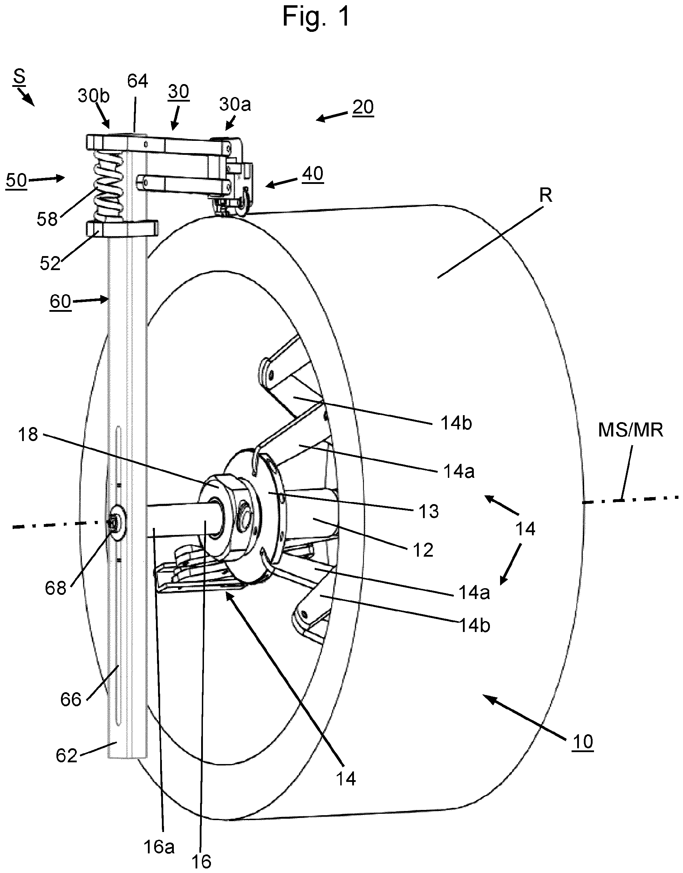

Fig. 1 zeigt eine schematische perspektivische Darstellung eines ersten Ausführungsbeispiels eines Schälgeräts S entsprechend der vorliegenden Erfindung.

Das Schälgerät S in der Ausführung nach Fig. 1 umfasst eine Spannbaugruppe 10 mit einer Mittelachse MS, eine Schälbaugruppe 20 mit einer Schälarmeinheit 30, einer Schälmesseranordnung 40, einer Kraftbeaufschlagungseinheit 50, und einen Schälarmträger 60. In der Fig. 1 ist das Schälgerät S an einem rohrförmigen Körper R angebracht, dessen Oberflächenmaterial zumindest abschnittsweise von der in Fig. 1 zu sehenden Stirnseite aus zu schälen bzw. abzutragen ist.

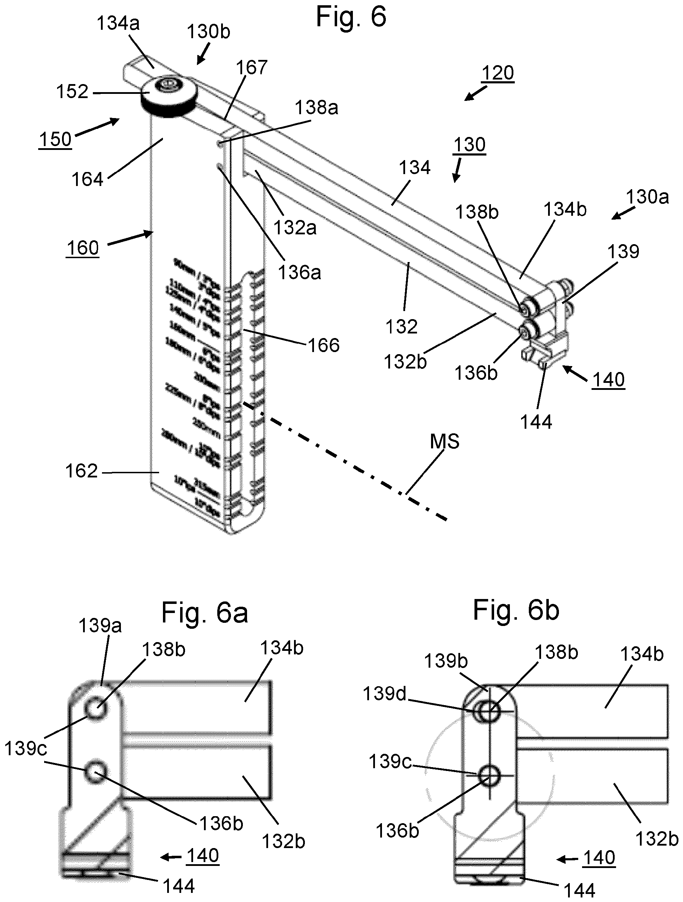

Die zum Fixieren der Schälbaugruppe 20 an dem rohrförmigen Körper R dienende Spannbaugruppe 10 umfasst eine Trägerwelle in Form einer Hohlwelle oder Trägerhülse 12, eine Welle in Form einer in Fig. 1 horizontal ausgerichteten Gewindespindel 16, auf der die Trägerhülse 12 angeordnet ist, und die sich koaxial zur Mittelachse MS der Spannbaugruppe 10 erstreckt. An der Trägerwelle oder Trägerhülse 12 sind drei, bezogen auf die Mittelachse MS der Spannbaugruppe 10, radial nach außen gerichtete Spanneinrichtungen in Form von Spannscheren 14 in einer, in Umfangsrichtung der Gewindespindel 16 betrachtet, gleichmäßigen Winkelteilung mit einem Winkel von 120° zwischen zwei benachbarten Spannscheren 14 angeordnet. Die Trägerhülse 12 weist an ihrem in Fig. 1 linken Ende einen sich von der Trägerhülse 12 radial nach außen erstreckenden ersten Flansch 13 auf. Die Spannscheren 14 umfassen jeweils zwei gelenkig miteinander verbundene Scherenelemente 14a, 14b, wobei die Scherenelemente 14a mit ihren einen Enden über den ersten Flansch 13 mit der Trägerhülse 12 gelenkig verbunden sind, und die Scherenelemente 14b mit ihren entsprechenden Enden mit einem zweiten Flansch 13 (vgl. Fig. 6) oder einem vergleichbaren Element gelenkig verbunden sind. Dieser zweite Flansch 13 ist vorzugsweise zumindest axial verschiebbar auf der Trägerhülse 12 angeordnet. Durch Verschieben des zweiten Flanschs 13 relativ zum ersten Flansch 13 auf der Trägerhülse 12 verlängern bzw. verkürzen sich die Spannscheren 14, wie dies im Zusammenhang mit Fig. 6 erläutert wird. Hierdurch kann die in den rohrförmigen Körper R eingeführte Spannbaugruppe 10, in an sich bekannter Weise, in diesem verspannt oder aus diesem gelöst sowie entfernt werden. Die Mittelachse der Trägerhülse 12 ist koaxial zur Mittelachse MR des rohrförmigen Körpers bzw. des Rohrs R ausgerichtet.

Ein in Fig. 1 nicht gezeigtes Trag- bzw. Halteband, welches zwischen den beiden Flanschen 13 angebracht ist, kann die Handhabung der Spannbaugruppe 10 beim Einspannen in den rohrförmigen Körper R erleichtern. Es ermöglicht eine genaue Positionierung der Spannbaugruppe 10 in dem rohrförmigen Körper R, und verringert die Quetschgefahr während des Spann- und Lösevorgangs.

Im gezeigten Ausführungsbeispiel der Spannbaugruppe 10 ist der erste Flansch 13 axial fest, aber um die Mittelachse MS der Spannbaugruppe 10 auf der Trägerhülse 12 drehbar gehalten. Ein am in Fig. 1 linken Ende der Trägerhülse 12 angebrachtes Spannelement in Form einer Mutter 18 ist mit der Trägerhülse 12 fest verbunden. Der in Fig. 1 nicht sichtbare zweite Flansch 13 ist auf dem rechten Ende der Trägerhülse 12 axial verschiebbar angebracht. Hierzu weist die Trägerhülse 12 im Bereich ihres rechten Endes ein Außengewinde 12a auf, auf das der zweite Flansch 13 mittels eines entsprechenden Innengewindes aufschraubbar ist. Durch Drehen der Mutter 18 dreht sich auch die Trägerhülse 12 um ihre Mittelachse bzw. die Mittelachse MS der Spannbaugruppe 10. Dabei bewegt sich der zweite Flansch 13 in axialer Richtung entlang der Trägerhülse 12 reversibel auf den ersten Flansch 13 zu, wobei die Spannscheren 14 gegen die Rohrinnenwandung verspannt oder von dieser gelöst werden (vgl. Fig. 6).

An dem in Fig. 1 linken Ende 16a der Gewindespindel 16 ist der Schälarmträger 60 befestigt. Der Schälarmträger 60 ist im Wesentlichen stabförmig und hat in den gezeigten Ausführungsbeispielen ein annähernd quadratisches Querschnittsprofil. Ein auf der von der Gewindespindel 16 im montierten Zustand wegweisenden Seite des Schälarmträgers 60 vorgesehenes Langloch 66 erstreckt sich von einem Bereich an dem in Fig. 1 unteren ersten Ende 62 des Schälarmträgers 60 in Richtung des zweiten Endes 64 etwa bis zu dessen Mitte, und senkrecht zur Längsausdehnung des Schälarmträgers 60 durch diesen hindurch. Der Schälarmträger 60 ist mittels eines durch das Langloch 66 gesteckten Befestigungselements 68, wie beispielsweise einer Schraube, am linken Ende 16a der Gewindespindel 16 lösbar befestigt. Der Schälarmträger 60 ist senkrecht zur Gewindespindel 16 ausgerichtet, d.h. er ist in Fig. 1 vertikal ausgerichtet.

Ist der Schälarmträger 60 durch ein Hohlprofil gebildet, kann sich in seinem Inneren ein Befestigungselement, wie eine Schiebemutter, ein Nutstein oder dergleichen, befinden, mittels dem der Schälarmträger 60 an der Gewindespindel 16 befestigbar ist. Dabei kann sich die Gewindespindel 16 in einem solchen Fall durch das Langloch 66 erstrecken.

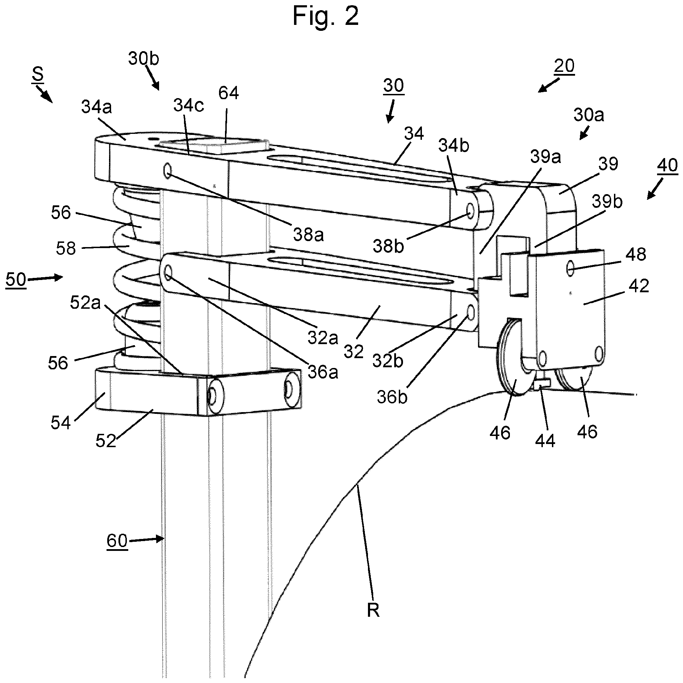

Am oberen, zweiten Ende 64 des Schälarmträgers 60 ist die Schälbaugruppe 20 angebracht, von der Fig. 2 eine vergrößerte perspektivische Darstellung zeigt.

Die Schälbaugruppe 20 umfasst die Schälarmeinheit 30, die Schälmesseranordnung 40 sowie die Kraftbeaufschlagungseinheit 50.

Die Schälarmeinheit 30 besitzt zwei parallel sowie beabstandet zueinander und in Fig. 1 horizontal ausgerichtete erste und zweite Schälarmelemente 32, 34 mit jeweils ersten und zweiten Enden 32a, 34a; 32b, 34b. Die Schälarmelemente 32, 34 liegen in der gemeinsamen Ebene der Schälarmeinheit 30 und der Mittelachse MS der Spannbaugruppe 10, d.h., sie sind bezogen auf die Mittelachse MS der Spannbaugruppe 10 in radialer Richtung übereinander angeordnet.

Die ersten Enden 32a, 34a der Schälarmelemente 32,34 sind über Gelenkbolzen 36a, 38a gelenkig im Bereich des zweiten Endes 64 des Schälarmträgers 60 an diesem gehalten. Die Gelenksbolzen 36a, 38a sind quer zu Längserstreckung des Schälarmträgers 60 und senkrecht zur Mittelachse MS der Spannbaugruppe 10 ausgerichtet.

Die Schälarmelemente 32, 34 haben in den gezeigten Ausführungsbeispielen einen im Wesentlichen rechteckigen Querschnitt, mit sich in einem Bereich zwischen deren ersten und zweiten Enden 32a, 34a; 32b, 34b erstreckenden Ausnehmungen, die das Gewicht der Schälarmelemente 32, 34 reduzieren. Selbstverständlich können die Schälarmelemente 32, 34 auch jeden andere geeigneten Querschnitt haben, wie einen runden, ovalen oder dreieckigen Querschnitt.

Die zweiten Enden 32b, 34b der Schälarmelemente 32, 34 sind über Gelenkbolzen 36b, 38b an einem ersten Schenkel 39a eines im wesentlichen C-förmigen Trägerelements 39 gelenkig befestigt. Das C-förmige Trägerelement 39 ist so ausgerichtet, dass der von ihm gebildete Buchstabe "C" auf dem Kopf mit, bezogen auf Fig. 2, nach unten weisenden freien Schenkeln 39a, 39b ausgerichtet ist. Auch die Gelenkbolzen 36b, 38b sind quer zu Längserstreckung des Schälarmträgers 60 und senkrecht zur Mittelachse MS der Spannbaugruppe 10 ausgerichtet.

Der bezogen auf die Mittelachse MS der Spannbaugruppe 10 jeweilige radiale, d.h. der entsprechend den Figuren 1 bis 5 vertikale Abstand zwischen den Gelenkbolzen 36a, 38a und den Gelenkbolzen 36b, 38b ist identisch. Weiterhin sind auch die Abstände zwischen den Gelenkbolzen 36a, 36b des Schälarmelements 32 und zwischen den Gelenkbolzen 38a, 38b des Schälarmelements 34 in axialer Richtung bezogen auf die Mittelachse MS der Spannbaugruppe 10, d.h. der entsprechend den Figuren 1 bis 5 in horizontaler Richtung, gleich groß, sodass die zwischen den Gelenkbolzen 36a, 36b; 38a, 38b liegenden Abschnitte der Schälarmelemente 32, 34 mit den entsprechenden Abschnitten des Schälarmträgers 60 und des zu ihnen weisenden Schenkels 39a des Trägerelements 39 ein Parallelogramm bilden, in dessen Eckpunkten die Gelenkbolzen 36a, 36b; 38a, 38b liegen. Hierdurch bleibt die Ausrichtung der Schälmesseranordnung 40 zum Schälarmträger 60, und somit auch die Ausrichtung der Schälmesseranordnung 40 zum rohrförmigen Körper R, in jeder Schwenkposition der Schälarmeinheit 30 in Umfangsrichtung des rohrförmigen Körpers R gleich.

Wie weiterhin in der Fig. 2 zu sehen ist, sind die Gelenkbolzenpaare 36a, 38a; 36b, 38b jeweils auf einer radial zur Mittelachse MS der Spannbaugruppe 10 ausgerichteten Linie angeordnet, die entsprechend Fig. 2 senkrecht zur sich horizontal erstreckenden Mittelachse MS der Spannbaugruppe 10 ausgerichtet ist. Eine Abweichung von dieser senkrechten Ausrichtung ist aber, zumindest in Grenzen, möglich.

An dem zweiten Schenkel 39b des im wesentlichen C-förmigen Trägerelements 39 ist die Schälmesseranordnung 40 angebracht.

Die Schälmesseranordnung 40 weist einen im wesentlichen quaderförmigen Messerwagen 42 auf, in dem ein Schälmesser 44 derart angeordnet ist, dass es auf der zur Mittelachse MS der Spannbaugruppe 10 weisenden Seite des Messerwagens 42 aus diesem herausragt bzw. hervorsteht. Der Messerwagen 42 weist weiterhin zwei, bezogen auf die Umfangsrichtung des rohrförmigen Körpers R, hintereinander angeordnete Laufrollen oder Räder 46 auf, deren Achsen parallel zueinander sowie im an einem rohrförmigen Körper R angebrachten Zustand parallel zur Mittelachse MS der Spannbaugruppe 10 ausgerichtet sind. Die Laufrollen 46 stehen an der zur Mittelachse MS der Spannbaugruppe 10 weisenden Seite des Messerwagens 42 aus diesem hervor.

Die Laufrollen 46 stehen in einem an einem rohrförmigen Körper R angebrachten Zustand auf der Oberfläche des rohrförmigen Körpers R auf, sodass der Messerwagen 42 auf dem rohrförmigen Körper R abrollen kann. Das Schälmesser 44, das in Richtung des rohrförmigen Körpers R aus dem Messerwagen 42 hervorsteht, ist durch ein nicht gezeigtes Federelement in Richtung der Mittelachse MR des rohrförmigen Körpers R vorgespannt, so dass es unter dieser Vorspannung auf dem rohrförmigen Körper R aufliegt und in das Material an der Außenumfangsfläche des rohrförmigen Körpers R eindringen kann.

Der Messerwagen 42 ist mit dem zweiten Schenkel 39b des Trägerelements 39 über einen Gelenkbolzen 48 verbunden, und gegenüber dem Trägerelement 39 um diesen verschwenkbar. Der Gelenksbolzen 48 ist parallel zur Mittelachse MS der Spannbaugruppe 10 ausgerichtet. Hierdurch kann der Messerwagen 42 eventuell an der Oberfläche des rohrförmigen Körpers R vorhandene Oberflächenstörungen, wie z.B. Abflachungen, folgen bzw. ausgleichen, ohne von dieser abzuheben.

Wie im Besonderen in Fig. 2 erkannt werden kann, ist das erste zu dem Schälarmträger 60 weisende Ende 32a des ersten Schälarmelements 32 C-förmig ausgebildet und umgreift den Schälarmträger 60 damit teilweise. Demgegenüber weist das erste Ende 34a des zweiten Schälarmelements 34 eine Durchbrechung 34c auf, deren Querschnitt zumindest annähernd dem Querschnitt des Schälarmträgers 60 entspricht, der in diese Durchbrechung 34c hineinreicht bzw. eingreift, diese aber auch vollständig durchsetzen kann.

Das erste Schälarmelement 32 endet mit seinem ersten Ende 32a an dem Schälarmträger 60, wohingegen das zweite Schälarmelement 34 mit seinem ersten Ende 34a über den Schälarmträger 60 in Fig. 2 nach links hinaus ragt.

Unterhalb der Schälbaugruppe 20 ist am Schälarmträger 60 eine Druckplatte 52 angeordnet, die in der Darstellung der Figuren 1 und 2 zumindest annähernd horizontal ausgerichtet ist. Die Druckplatte 52 weist eine Durchbrechung 52a auf, deren Querschnitt im Wesentlichen dem Querschnitt des Schälarmträgers 60 entspricht, der sich zumindest annähernd senkrecht durch diese Durchbrechung 52a hindurch erstreckt. Die Durchbrechung 52a ist geringfügig größer als der Querschnitt des Schälarmträgers 60, sodass die Druckplatte 52 entlang des Schälarmträgers 60 verschiebbar ist. Die Durchbrechung 52a ist in dem zur Schälmesseranordnung 40 weisenden Abschnitt der Druckplatte 52 angeordnet, sodass sich die Druckplatte 52 im Wesentlichen zu der der Schälmesseranordnung 40 gegenüberliegenden Seite des Schälarmträgers 60 erstreckt, und hier einen Druckplattenabschnitt 54 bildet.

Zwischen dem ersten Ende 34a des Schälarmelements 34 und dem Druckplattenabschnitt 54 der Druckplatte 52 ist ein ein Kraftbeaufschlagungselement bildendes, elastisches Element 58, wie beispielsweise eine in den Ausführungsbeispielen gezeigte Druckfeder, angeordnet.

An den zueinander weisenden Flächen des ersten Endes 34a des Schälarmelements 34 und des Druckplattenabschnitts 54 der Druckplatte 52 sind im Wesentlichen zylindrische Führung- bzw. Sicherungselemente 56 angebracht, die das elastische Element 54 in seiner Position sichern.

Die Durchbrechung 52a in der Druckplatte 52 ist dabei so ausgestaltet, dass die Druckplatte 52 in einer gewünschten Position an dem Schälarmträger 60 unter Einwirkung einer durch das elastische Element 54 aufgebrachten Kraft verkantet und so in dieser Position gegen weiteres Verschieben gesichert wird. Die Druckplatte 52 kann zusätzlich mit wenigstens einem Sicherungselement versehen sein, um diese in der gewünschten Position zu fixieren, und gegen unbeabsichtigtes Verschieben zu sichern, z.B. bei möglicherweise auftretenden Lastwechseln. Als Sicherungselemente können beispielsweise Schrauben in der Druckplatte 52 vorgesehen sein, mittels denen diese am Schälarmträger 60 in der gewünschten Position verspannt werden kann. Denkbar ist auch, ein Klemmelement am Schälarmträger 60 unmittelbar unterhalb der Druckplatte 52 anzubringen, wenn sich diese in der gewünschten Position befindet.

Die Druckplatte 52 mit dem Druckplattenabschnitt 54, die Führung- bzw. Sicherungselemente 56 und das elastische Element 54 bilden die Kraftbeaufschlagungseinheit oder Vorspanneinrichtung 50. Diese erzeugt eine auf die Schälarmeinheit 30 wirkende Auslenkkraft oder Vorspannung, mit der die Schälmesseranordnung 40 mit den Laufrollen 46 auf dem rohrförmigen Körper R aufliegt.

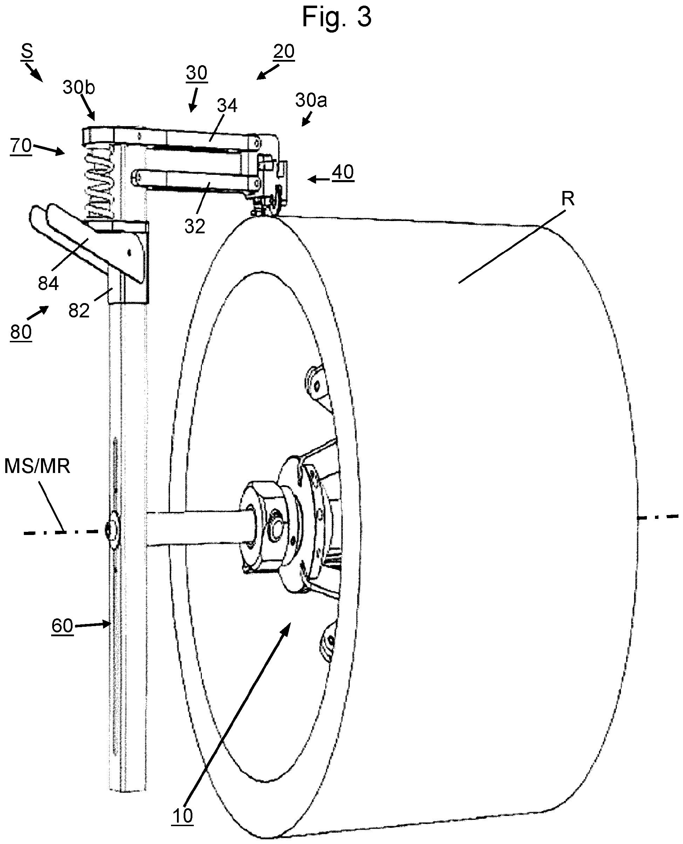

Das in den Figuren 3 bis 5 gezeigte zweiten Ausführungsbeispiel des erfindungsgemäßen Schälgeräts S umfasst ebenfalls eine Spannbaugruppe 10 sowie eine Schälbaugruppe 20 mit einer Schälarmeinheit 30, einer Schälmesseranordnung 40 und einem Schälarmträger 60, die identisch zu den entsprechenden Baugruppen des Schälgeräts S nach den Figuren 1 und 2 aufgebaut und ausgestaltet sind. Das zweite Ausführungsbeispiel der Figuren 3 bis 5 unterscheidet sich vom ersten Ausführungsbeispiel entsprechend der Figuren 1 und 2 im Aufbau der Kraftbeaufschlagungseinheit 70.

Die Kraftbeaufschlagungseinheit 70 des Schälgeräts S nach den Figuren 3 bis 5 umfasst neben einer Druckplatte 72, die im Aufbau der Druckplatte 52 gleicht, und einen entsprechenden Druckplattenabschnitt 74 aufweist, weiterhin ein elastisches Element 78, das zwischen dem Druckplattenabschnitt 74 und dem erste Ende 34a des Schälarmelements 34 angeordnet und durch entsprechende Führungs- bzw. Sicherungselemente 76 in seiner Position gesichert ist.

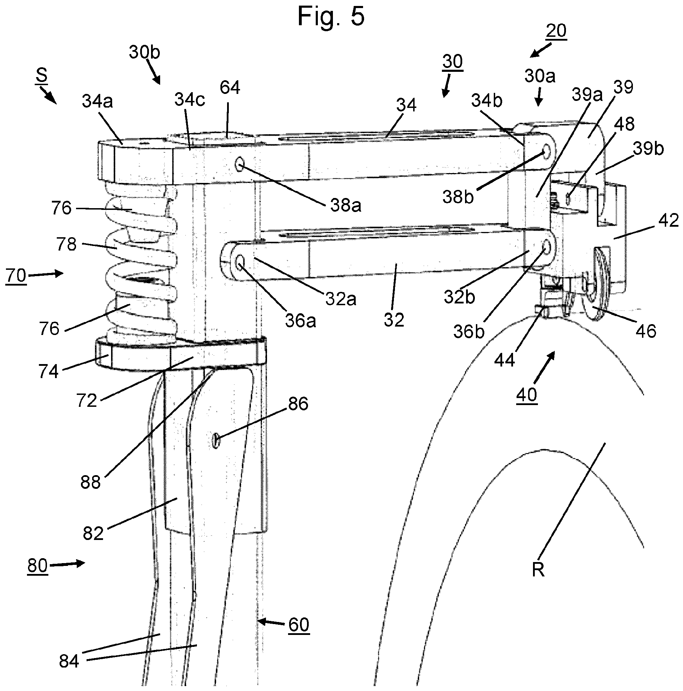

Darüber hinaus weist die in Fig. 5 vergrößert dargestellte Kraftbeaufschlagungseinheit 70 entsprechend dem zweiten Ausführungsbeispiel des Schälgeräts S eine Spannhebelanordnung 80 auf. Die Spannhebelanordnung 80 umfasst eine rohrförmige Hülse 82, deren Querschnitt im Wesentlichen dem Querschnitt des Schälarmträgers 60 entspricht, aber gegenüber diesem geringfügig größer ist, und die auf dem Schälarmträger 60 verschiebbar angeordnet ist. Dabei kann die Hülse 82 lösbar, z.B. mittels entsprechender Sicherungsschrauben oder einer anderen geeigneten Klemmvorrichtung, mit dem Schälarmträger 60 verbunden sein, um diese in ihrer Position auf dem Schälarmträger 60 zu sichern.

An der Hülse 82 ist ein Spannhebel 84 mit einem ersten Ende 84a und einem zweiten Ende 84b um eine im Bereich des zweiten Endes 84b angeordneten Drehachse 86 schwenkbar befestigt. Die Drehachse 86 erstreckt sich im Wesentlichen senkrecht zur Längserstreckung des Schälarmträgers 60 und quer zur Mittelachse MS der Spannbaugruppe 10.

Die Drehachse 86 kann sich durch den Schälarmträger 60 und die Hülse 82 hindurch erstrecken, um die Hülse 82 auf dem Schälarmträger 60 zu fixieren.

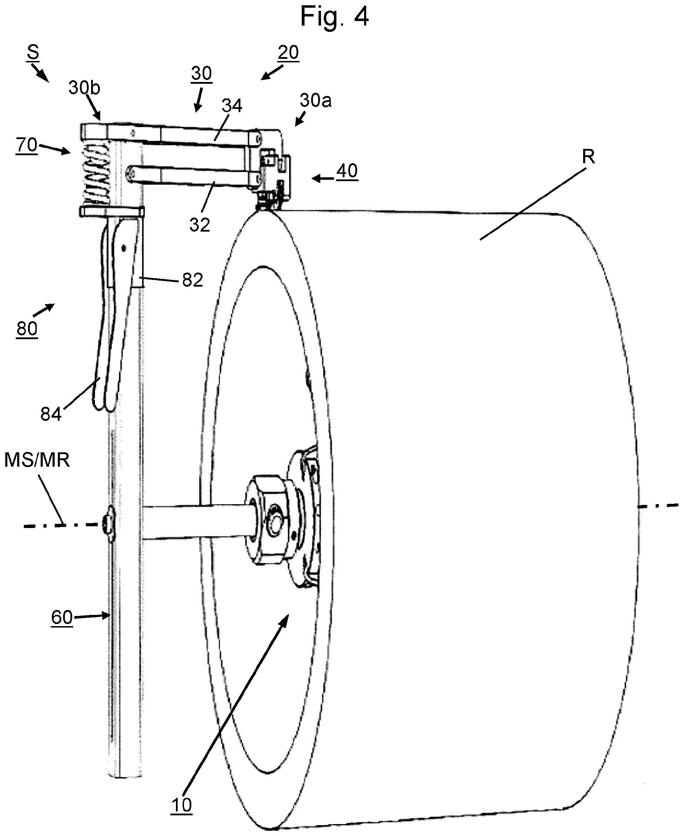

Der Spannhebel 84 weist im Bereich seines zweiten Endes 84b einen Exzenternocken 88 auf. Dieser ist so gestaltet, dass der Abstand zwischen der Achse 86 und der Längsseitenkante des Spannhebels 84 an der Längsseite des Spannhebels 84 kleiner ist als der Abstand zwischen der Drehachse 86 und dem Stirnende des Spannhebels 84. Hierdurch wird die Druckplatte 72 im vorgespannten Zustand der Schälbaugruppe 20, wie dieser in Fig. 4 gezeigt ist, gegenüber dem nicht vorgespannten Zustand, der in Fig. 3 zu sehen ist, in Richtung des zweiten Endes 64 des Schälarmträgers 60 verschoben, wodurch das elastische Element 78 komprimiert wird.

Weiterhin kann der Exzenternocken 88 so ausgestaltet sein, dass der Spannhebel 84 im vorgespannten Zustand der Schälbaugruppe 20 in dieser Spannstellung gegen unbeabsichtigtes Betätigen gesichert ist. Hierfür kann beispielsweise eine entsprechend gestaltete Stirnfläche des Spannhebels 84 im Bereich des Exzenternockens 88 vorgesehen sein, die eine Abflachung oder ein Rastelement aufweisen kann, welche mit der korrespondierenden Oberfläche der Druckplatte 72 zusammenwirken.

Der Spannhebel 84 ist in der Ausführung entsprechend der Figuren 3 bis 5 durch zwei identische Teilhebel gebildet, die an zwei gegenüberliegenden Seiten der Hülse 82 angeordnet sind. Selbstverständlich ist es möglich, dass die Teilhebel nicht nur über die Drehachse 86, sondern darüber hinaus auch noch an ihren freien Enden miteinander verbunden sind, so dass beispielsweise deren von der Drehachse 86 wegweisenden Abschnitte einen gemeinsamen U-förmigen Abschnitt bilden, der im vorgespannten Zustand der Schälbaugruppe 20 entsprechend Fig. 4, den Schälarmträger 60 umgreift.

Fig. 6 zeigt eine schematische, perspektivische Darstellung eines dritten Ausführungsbeispiels eines Schälgeräts entsprechend der vorliegenden Erfindung, jedoch ohne eine zugehörige Spannbaugruppe, wie bspw. die Spannbaugruppe 10. In dieser Darstellung ist zum besseren Verständnis lediglich die Mittelachse MS der zugehörigen Spannbaugruppe dargestellt.

Wie der Fig. 6 entnommen werden kann, umfasst dieses Schälgerät eine Schälbaugruppe 120 sowie eine Kraftbeaufschlagungseinheit 150, die an dem oberen, zweiten Ende 164 des Schälarmträgers 160 angeordnet sind.

Der Schälarmträger 160 weist im wesentlichen eine quaderförmige Gestalt auf und umfasst ein sich zumindest annährend parallel zur Längserstreckung des Schälarmträgers 160 erstreckendes Langloch 166, welches sich von seinem ersten Ende 162 in Richtung seines zweiten Endes 164 und senkrecht zur Längsausdehnung des Schälarmträgers 160 durch diesen hindurch erstreckt. Der Schälarmträger 160 kann mittels des Langlochs 166, wie im Zusammenhang mit dem ersten und zweiten Ausführungsbeispiel des Schälgeräts S erläutert, an einer Spannbaugruppe, wie der Spannbaugruppe 10 befestigt werden. Der Schälarmträger 160 ist, wie ebenfalls in Fig. 6 zu sehen ist, mit Markierungen versehen, die entlang des Langlochs 166 angeordnet sind, und die die Befestigungsposition des Schälarmträgers 160 an der Spannbaugruppe in Bezug auf den Durchmesser eines zu bearbeitenden rohrförmigen Körpers R anzeigen bzw. erlauben. An seinem zweiten Ende 164 erstreckt sich eine U-förmige und zumindest annähernd senkrecht zur Längsachse des Schälarmträgers 160 über die gesamte Breite des Trägers 160 verlaufende Ausnehmung 167 von der Stirnseite des Schälarmträgers 166 in Richtung des ersten Endes 162. Die Tiefe der Ausnehmung 167 entspricht in etwa der Höhe der Schälarmeinheit 130, und die Breite der Ausnehmung 167 entspricht in etwa der Breite der Schälarmeinheit 130.

Die Schälbaugruppe 120 umfasst die Schälarmeinheit 130 sowie die Schälmesseranordnung 140. Die Schälarmeinheit 130 besitzt zwei parallel sowie beanstandet zueinander ausgerichtete erste und zweite Schälarmelemente 134, 132 mit jeweils ersten und zweiten Enden 132a, 134a; 132b, 134b. Die Schälarmelemente 132, 134, die einen quadratischen Querschnitt besitzen, liegen in der gemeinsamen Ebene der Schälarmeinheit 130 und der Mittelachse MS der Spannbaugruppe, d.h., sie sind, bezogen auf die Mittelachse MS der Spannbaugruppe, in radialer Richtung übereinander angeordnet.

Die ersten Enden 132a, 134a der Schälarmelemente 132,134 sind in der Ausnehmung 176 des Schälarmträgers 160 aufgenommen und darin über Gelenkbolzen 136a, 138a gelenkig gehalten. Die Gelenksbolzen 136a, 138a sind quer zu Längserstreckung des Schälarmträgers 160 und senkrecht zur Mittelachse MS der Spannbaugruppe ausgerichtet. Dabei überragt das erste Ende 134a des ersten Schälarmelements 134 das erste Ende 132a des zweiten Schälarmelements 132, und ragt aus der Ausnehmung 167 heraus.

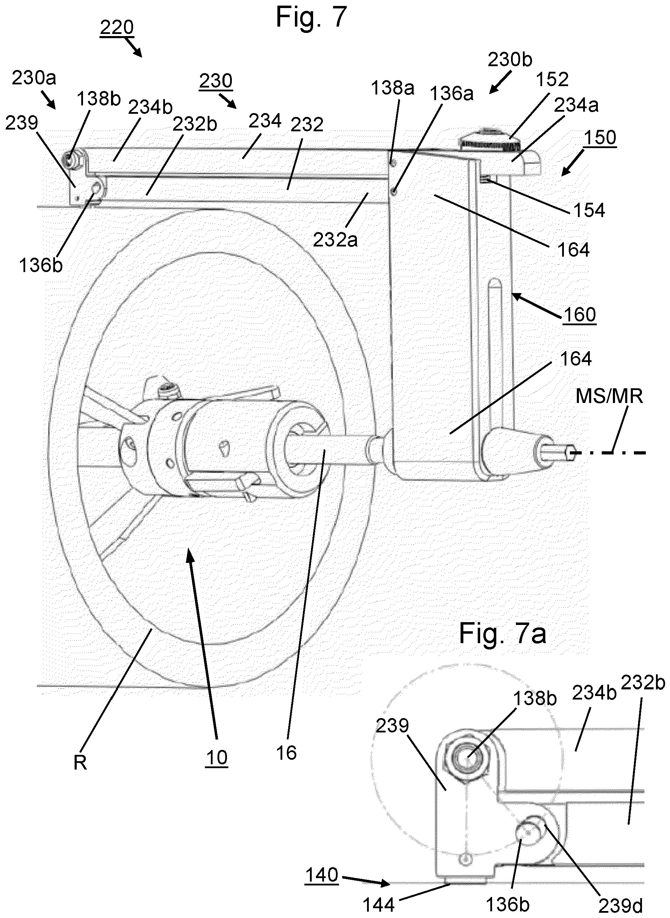

Am zweiten Ende 164 des Schälarmträgers 160 ist eine Kraftbeaufschlagungseinheit oder Vorspanneinheit 150 angeordnet. Diese umfasst einen Einstellmechanismus zum Einstellen der Höhe der Auslenkkraft in Form einer Stellschraube 152, die in ein entsprechendes Gewinde in der Stirnfläche des zweiten Endes 164 des Schälarmträgers 160 eingeschraubt ist. Der Schraubenkopf der Stellschraube 152 überdeckt dabei zumindest teilweise das erste Ende 134a des ersten Schälarmelements 134. Die Kraftbeaufschlagungseinheit oder Vorspanneinheit 150 umfasst weiterhin ein in der Ausnehmung 167 angeordnetes, und auf das erste Ende 134a des ersten Schälarmelements 134 wirkendes elastisches Element in Form einer Feder 154, wie diese in Fig. 7 zu sehen ist.

Die zweiten Enden 132b, 134b der Schälarmelemente 132,134 sind über Gelenkbolzen 136b, 138b an einem Trägerelements 139 gelenkig befestigt, das eine im wesentlichen quaderförmige Gestalt hat, und seitlich neben den zweiten Enden 132b, 134b der Schälarmelemente 132,134 angeordnet ist. Das in Fig. 6 untere Ende des Trägerelements 139 überragt das zweite Schälarmelement 132 in Richtung der Mittelachse MS der Spannbaugruppe. An dem unteren Ende des Trägerelements 139 ist die Schälmesseranordnung 140 angebracht. In dieser Ausführung umfasst die Schälmesseanordnung 140 ein Schälmesser 144, welches mit einem nicht näher dargestellten Befestigungselement, wie beispielsweise einer Schraube, an dem unteren Ende des Trägerelements 139 befestigt ist.

Fig. 6a zeigt eine vergrößerte Darstellung einer ersten Ausführungsform eines Trägerelements 139a des Schälgeräts nach Fig. 6. Das Trägerelement 139a weißt zwei Bohrungen 139c auf, deren Innendurchmesser dem Außendurchmesser der Gelenkbolzen 136b, 138b der entsprechen, und in die sich die Gelenkbolzen 136b, 138b erstrecken. Somit bilden die Gelenkbolzen 136a, 138a ,136b, 138b ein Parallelogramm, wodurch die Ausrichtung des Trägerelements 139a, und somit die Ausrichtung der Schälmesseranordnung 140, beim Verschwenken der Schälarmeinheit 130 um die durch die Gelenkbolzen 136a, 138a ,136b, 138b gebildeten Schwenkachsen beibehalten wird.

Fig. 6b zeigt eine vergrößerte Darstellung einer zweiten Ausführungsform eines Trägerelements 139b des Schälgeräts nach Fig. 6. Die Trägerelemente 139a, 139b sind identisch aufgebaut und unterscheiden sich lediglich in der Ausgestaltung der jeweils oberen Bohrung. Das Trägerelement 139b weist eine obere Bohrung 139d auf, die als teilkreisförmiges Langloch ausgeführt ist, mit einem Kreisbogen, der konzentrisch zu der Bohrung 139c verläuft, wie dies durch den in Fig. 6b durch unterbrochene Linien dargestellten Kreis verdeutlicht ist. Der Radius des Kreisbogens entspricht dem Abstand der Mitten der Bohrungen 139c, 139d. Diese Ausführung der Bohrung 139d erlaubt ein zusätzliches Verschwenken des Trägerelements 139b, und damit des Schälmessers 144 um den Bolzen 136b. Diese zusätzliche Verschwenkbarkeit des Schälmessers 144 ermöglicht eine weitere Anpassung des Schälgeräts an den zu bearbeitenden rohrförmigen Körper R, beispielsweise für den Fall, dass das Ende des rohrförmigen Körpers R konusförmig ist.

Fig. 7 ist eine perspektivische Darstellung eines vierten Ausführungsbeispiels eines erfindungsgemäßen Schälgeräts. Dieses umfasst eine Spannbaugruppe 10, an dem, über die Spindel 16, der Schälarmträger 160 mit seinem unteren, ersten Ende 162 befestigt ist. Am oberen, zweiten Ende 164 des Schälarmträgers 160 ist eine Schälbaugruppe 220 mit einer Schälarmeinheit 230 angeordnet, die im Wesentlichen mit dem Aufbau der Schälarmeinheit 130 übereinstimmt.

Die Schälarmeinheit 230 unterscheidet sich von der Schälarmeinheit 130 durch die Ausgestaltung des Trägerelements 239, welches eine wesentlichen L-förmige Gestalt hat, und bei der die die Gelenkbolzen 136b, 138b aufnehmenden Bohrungen an den Enden des L angeordnet sind.

Wie in der vergrößerte Darstellung des Trägerelements 239 nach Fig. 7a zu sehen ist, ist das zweite Ende 232b des Schälarmelements 232 kürzer als das zweite Ende 234b des Schälarmelements 234, sodass ein Schenkel des Trägerelements 239 eine im Wesentlichen senkrechte Ausrichtung hat, während der andere Schenkel annähernd horizontal zum Schälarmelement 232 ausgerichtet ist.

In dieser Ausgestaltung ist der Abstand zwischen den Gelenksbolzen 138a, 138b größer als der Abstand zwischen den Gelenksbolzen 136a, 136b. Hierdurch ändert sich die Ausrichtung des Trägerelements 239, und somit auch die Ausrichtung des Schälmessers 144 zu dem zu bearbeitenden rohrförmigen Körper R während des Verschwenken der Schälarmeinheit 230.

Wie weiterhin in Fig. 7a zu sehen ist, ist die Bohrung 239d am Ende des horizontal ausgerichteten Schenkels als teilkreisförmiges Langloch ausgeführt ist, mit einem Kreisbogen, der konzentrisch zur der in Fig. 7a nicht zu sehenden anderen Bohrung in dem Trägerelement 239 verläuft, und dessen Radius dem Abstand der Mitten dieser Bohrungen entspricht, wie dies durch den in Fig. 7a durch unterbrochene Linien wiedergegebenen Kreis verdeutlicht ist. Entsprechend der gewählten Länge des teilkreisförmigen Langlochs 139d kann hier durch die Ausrichtung des Schälmessers 144 zu dem zu bearbeitenden rohrförmigen Körper R korrigiert bzw. derart angepasst werden, dass die Bearbeitung eines rohrförmigen Körpers R mit einem konusförmigen Ende möglich ist.

Wie im Zusammenhang mit dem Trägerelement 139 erläutert, ist auch an dem Trägerelement 239 eine Schälmesseranordnung 140 mit einem Schälmesser 144 angeordnet. Das Schälmesser 144 ist mit einem nicht näher gezeigten Befestigungselement an der in Fig. 7a nach unten weisenden Seite des Trägerelements 239 befestigt.

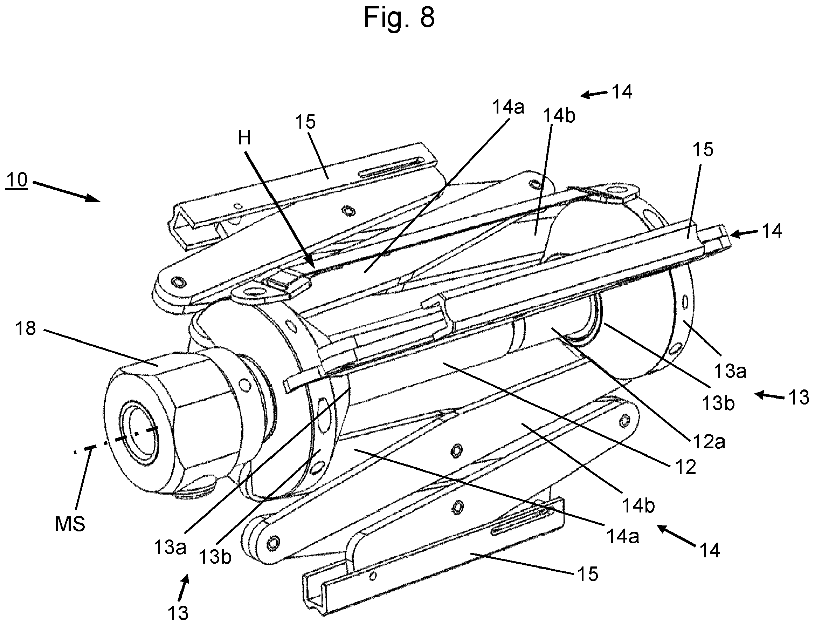

Fig. 8 zeigt die Spannbaugruppe 10 entsprechend den Figuren 1, 3 und 4. Die Spannbaugruppe 10 umfasst die Trägerhülsen 12 mit der an ihrem in Fig. 6 linken Ende angebrachten und mit der Trägerhülse 12 fest verbundenen Mutter 18. Auf dem linken Ende der Trägerhülse 12 ist der erste Flansch 13 axial fest, aber um die Mittelachse der Trägerhülse 12, die koaxial zur Mittelachse MS der Spannbaugruppe 10 ausgerichtet ist, drehbar angeordnet. Auf dem rechten Ende der Trägerhülse 12 ist der zweite Flansch 13 axial bewegbar angeordnet. Hierzu weist die Trägerhülse 12 im Bereich ihres rechten Endes das Außengewinde 12a auf, das mit dem entsprechenden Innengewinde des zweiten Flansches 13 zusammenwirkt.

Die Flansche 13 sind im wesentlichen konusförmig mit einer Konusbasis 13a und einem sich verjüngenden Konusende 13b, wobei die Mittelachse des Flansche 13 koaxial zur Mittelachse der Trägerhülse 12 ausgerichtet ist. Die sich verjüngenden Konusenden 13b weisen zueinander. An ihrer nach außen gerichteten und im Durchmesser größeren Konusbasis 13b sind die jeweils paarweise gelenkig miteinander verbundenen Spannscherenelemente 14a, 14b der Spannscheren 14 derart gelenkig angeordnet, dass sie um eine Achse senkrecht zur Mittelachse MS der Spannbaugruppe 10 schwenkbar sind.

An den äußeren Enden der äußeren Spannscherenelemente 14a, 14b der Spannscheren 14 sind annähernd U-förmige Stützelemente 15 angeordnet, die in ihrer Längserstreckung zumindest annähernd parallel zur Mittelachse MS der Spannbaugruppe 10 ausgerichtet sind, und mit ihrer offenen Seite zur Mittelachse MS der Spannbaugruppe 10 weisen. Durch ihre gelenkige Verbindung mit dem einen Spannscherenelement 14a, 14b sowie der Verbindung durch ein Langloch mit dem entsprechend anderen Spannscherenelement 14b, 14a verbleiben die Stützelemente 15 in dieser Ausrichtung. Im einsatzfähigen, d.h. montierten Zustand des Schälgeräts S liegen die Stützelemente 15 an der Innenseite des rohrförmigen Körpers R an.

An der Spannbaugruppe 10 der Fig. 6 ist weiterhin ein Halteelement H in Form eines Haltebandes angebracht. Das Halteelement oder Halteband H ist mit seinen Enden an der Konusbasis 13a der Flansche 13 etwa mittig zwischen zwei benachbarten Spannscheren 14 befestigt. Die Länge des Haltebandes H ist so gewählt, dass dieses im in Fig. 6 gezeigten, entspannten Zustand der Spannbaugruppe 10, in dem die Flansche 13 ihren maximalen Abstand zueinander erreichen, zwischen den Flanschen 13 gespannt ist.

Neben einer Erleichterung der Handhabung des Schälgeräts S beim Einsetzen in einen rohrförmigen Körper R oder der Entnahme des Schälgerätes S aus diesem, kann das Halteband H auch als Begrenzung für das maximal mögliche Zusammenfalten der Spannbaugruppe 10 dienen.

Alternativ zu einem flexiblen Band kann auch ein fester Griff als Halteelement H verwendet werden, der zum Beispiel mit einem Ende an einer der 'Flansche 13 befestigt ist und sich mit seinem zweiten Ende in Richtung des zweiten 'Flanschs 13 erstreckt. Ein solcher fester Griff könnte, ähnlich dem Stützelement 15, über ein Langloch im Bereich seines anderen Endes mit des zweiten Flanschs 13 verbunden sein, wodurch die Beweglichkeit der beiden 'Flansche 13 erhalten bleibt, die Handhabung der Spannbaugruppe 10 aber verbessert werden kann.

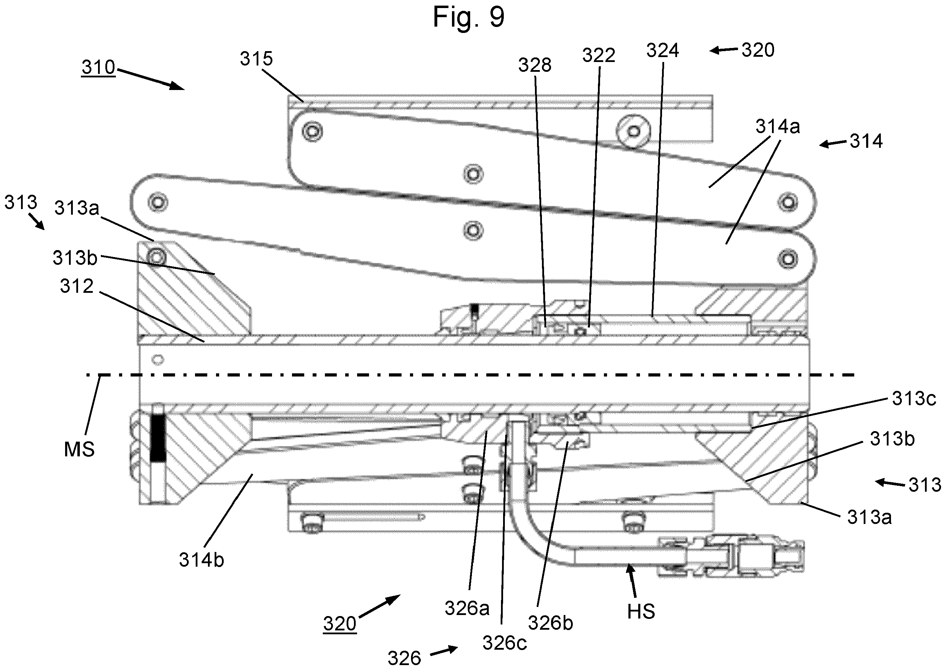

Fig. 9 ist eine Schnittdarstellung eines zweiten Ausführungsbeispiels einer erfindungsgemäßen Spannbaugruppe 310 mit einer Mittelachse MS.

Die Spannbaugruppe 310 umfasst eine als Hohlwelle ausgeführte Trägerwelle oder Trägerhülse 312 mit einem an ihrem in Fig. 9 linken Ende angebrachten und mit der Trägerhülse 312 fest verbundenen erste Flansch 313. An dem in Fig. 9 rechten Ende der Trägerhülse 312 ist ein zweiter Flansch 313 auf der Trägerhülse 312 axial verschiebbar angeordnet. Die Trägerhülse 312 ist koaxial zur Mittelachse MS der Spannbaugruppe 310 angeordnet.

Die im wesentlichen konusförmigen Flansche 313 besitzen eine Konusbasis 313a und ein zur Mitte der Trägerhülse 312 gerichtetes, und sich verjüngendes Konusende 313b. An ihrer nach außen gerichteten und im Durchmesser größeren Konusbasis 313b sind jeweils paarweise gelenkig miteinander verbundene Spannscherenelemente 314a, 314b von Spannscheren 314 derart gelenkig angeordnet, dass sie jeweils um eine Achse senkrecht zur Mittelachse MS der Spannbaugruppe 310 schwenkbar sind. Die Spannscheren 314 entsprechen in ihrem Aufbau und ihre Funktionsweise den Spannscheren 14 der Spannbaugruppe 10.

An den äußeren Enden der der Spannscheren 314 sind annähernd U-förmige Stützelemente 315 angeordnet, die in ihrer Längserstreckung zumindest annähernd parallel zur Mittelachse MS der Spannbaugruppe 310 ausgerichtet sind, und mit ihrer offenen Seite zur Mittelachse MS der Spannbaugruppe 310 weisen. Sie sind gelenkig mit dem einen Spannscherenelement 314a, 314b sowie durch ein Langloch mit dem entsprechend anderen Spannscherenelement 314b, 314a verbunden und verbleiben dadurch während der Betätigung der Spannscheren 314 in dieser Ausrichtung. Im einsatzfähigen, d.h. montierten Zustand des Schälgeräts liegen die Stützelemente 315 an der Innenseite des rohrförmigen Körpers R an.

Zum Betätigen der Spannscheren 314 weist die Spannbaugruppe 310 einen Betätigungsmechanismus 320 auf. Der Betätigungsmechanismus 320 umfasst einen Kolben-Zylinder-Mechanismus mit einem auf der Hohlwelle oder Trägerhülse 312 axial fest angeordneten ringförmigen Kolben 322 und einem hülsenförmigen Zylinder 324, der koaxial zur Mittelachse MS der Spannbaugruppe 310 auf der Trägerhülse 312 angeordnet ist. Der Zylinder 324 liegt mit seiner Innenfläche auf der Außenumfangsfläche des Kolbens 322 fluiddicht auf und ist in axialer Richtung verschiebbar gehalten.

Der Betätigungsmechanismus 320 umfasst weiterhin ein koaxial zur Mittelachse MS der Spannbaugruppe 310 auf der Trägerhülse 312 angeordnetes, hülsenförmiges Anschlusselement 326, mit einem Anschlussabschnitt 326a und einem Befestigungsabschnitt 326b.

Der Innendurchmesser des zum in Fig. 9 rechten Endes der Trägerhülse 312 weisenden Befestigungsabschnitts 326b des Anschlusselements 326 entspricht dem Außendurchmesser des Zylinder 324, dessen linkes Ende in dem Befestigungsabschnitt 326b aufgenommen und daran befestigt ist. Der Innendurchmesser des Anschlussabschnitts 326a entspricht dem Außendurchmesser der Trägerhülse 312, und ist auf dieser verschiebbar gehalten. Der Anschlussabschnitt 326a weist zudem eine Anschlussbohrung 326c auf, an die über eine Fluidleitung HS, wie einen Hydraulikschlauch, eine Fluidquelle, wie eine Hydraulikpumpe, angeschlossen werden kann.

Wie weiterhin in Fig. 9 zu sehen ist, weist der rechte Flansch 313 an seiner zum Betätigungsmechanismus 320 weisenden Seite eine zylindrische, koaxial zur Trägerhülse 312 ausgerichtete Ausnehmung 313c auf, deren Durchmesser dem Außendurchmesser des Zylinder 324 entspricht, und in die das rechte Ende des Zylinder 324 hineinragt und dort befestigt ist.

Zwischen dem Kolben 322 und der zu dem Kolben 322 weisenden Stirnseite des Anschlussabschnitts 326a des Anschlusselements 326 einerseits und der Innenseite des linken Endes des Zylinder 324 sowie der dieser Fläche gegenüberliegenden Außenseite der Trägerhülse 312 ist ein ringförmiger Zylinderraum 328 gebildet. Der Zylinderraum 328 steht in Fluidverbindung mit der Anschlussbohrung 326c, so dass ein über die Fluidleitung HS gefördertes Fluid in den Zylinderraum 328 gelangt.

Der Flansch 313, der Zylinder 324 und das Anschlusselement 326 sind fest und fluiddicht miteinander verbunden. Wird ein Fluid unter Druck über die Fluidleitung HS in den Zylinderraum 328 gefördert, verschiebt sich das Anschlusselement 326 mit dem Zylinder 324 und dem daran befestigten rechten Flansch 313 entsprechend Fig. 9 nach links, wobei der Zylinderraum 328 vergrößert wird. Durch diese Bewegung des Flansches 313 werden die Spannscheren 314 betätigt, die sich dabei radial nach außen verlängern und die Spannbaugruppe 310 in dem rohrförmigen Körper R verspannen. Zum Entfernen der Spannbaugruppe 310 aus dem rohrförmigen Körper R genügt es, dass im Zylinder 324 unter Druck stehende Fluid zu entlasten, indem dieses in ein entsprechendes Reservoir zurückfließen kann. Dadurch ist es möglich, die Spannscheren 314 manuell zumindest soweit zusammenzudrücken, dass die Spannbaugruppe 310 aus dem rohrförmigen Körper R entnommen werden kann.

Die Entlastung des im Zylinder 324 unter Druck stehenden Fluids kann durch das Betätigen eines entsprechenden Rückflussventils erfolgen. Ein solches Rückflussventil kann der Fluidquelle zugeordnet sein, also bspw. an dieser angeordnet. Alternativ besteht die Möglichkeit, dass ein solches Rückflussventil an dem Betätigungsmechanismus 320 der Spannbaugruppe 310 angeordnet oder Bestandteil der Fluidleitung HS ist.

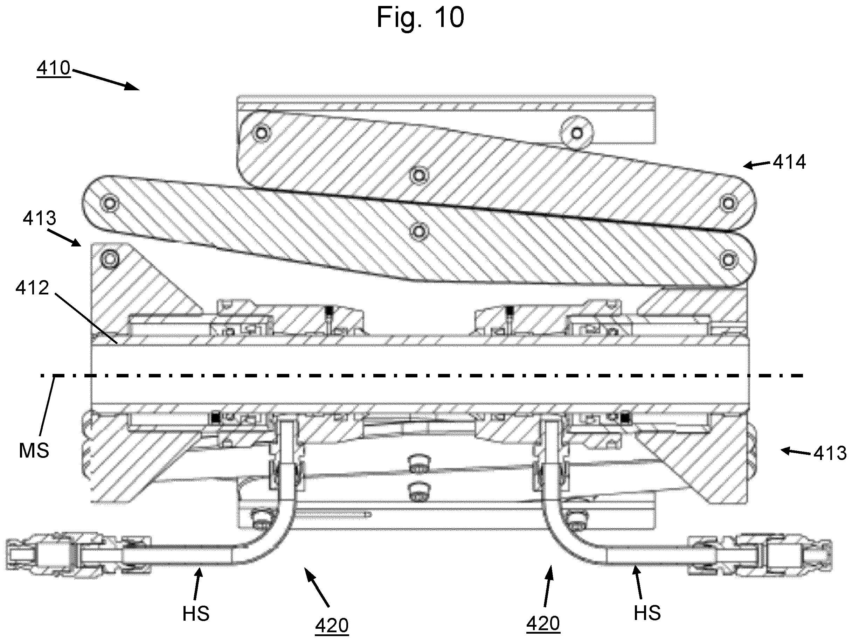

Fig. 10 eine Schnittdarstellung eines dritten Ausführungsbeispiels einer erfindungsgemäßen Spannbaugruppe 410.

Die Spannbaugruppe 410 umfasst, wie bereits die Spannbaugruppe 310 entsprechend Fig. 9, eine Hohlwelle oder Trägerhülse 412, auf deren in Fig. 10 rechten Ende ein erster Flansch 413 verschiebbar angeordnet ist. Auf der Trägerhülse 412 ist weiterhin ein erster Betätigungsmechanismus 420 angeordnet, der in seinem Aufbau dem von der Spannbaugruppe 310 entsprechend Fig. 9 bekannten Betätigungsmechanismus 320 entspricht.

Die Spannbaugruppe 410 umfasst darüber hinaus einen weiteren Betätigungsmechanismus 420, der ebenfalls auf der Trägerhülse 412 angeordnet ist. Dieser weitere Betätigungsmechanismus 420 ist identisch zu dem ersten Betätigungsmechanismus 420 aufgebaut, aber spiegelbildlich hierzu angeordnet, und mit dem in Fig. 10 linken Flansch 413 verbunden. An den Flanschen 413 sind Spannscheren 414 angeordnet, die identische zu den Spannscheren 314 der Spannbaugruppe 310 aufgebaut sind.

Wie in Fig. 10 zu sehen ist, sind beide Betätigungsmechanismen 4320 jeweils über eine Fluidleitung HS mit einer Fluidquelle verbunden. Es ist möglich, dass beide Fluidleitungen HS mit der gleichen Quelle verbunden sind, und wahlweise gemeinsam oder getrennt angesteuert werden können. Die Betätigung kann gleichzeitig oder zeitlich nacheinander erfolgen.

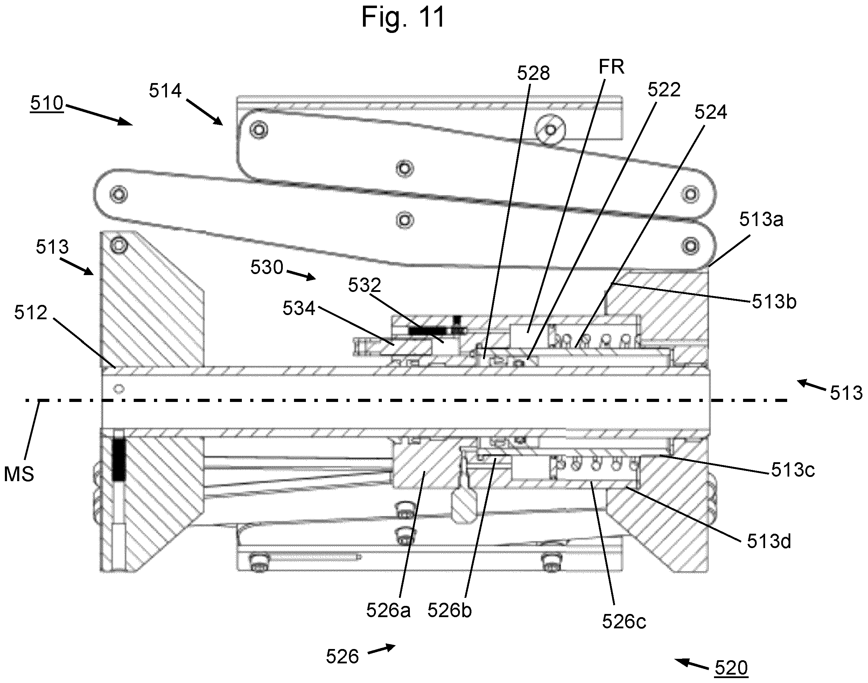

Fig. 11 zeigt eine Schnittdarstellung eines vierten Ausführungsbeispiels einer erfindungsgemäßen Spannbaugruppe 510.

Diese umfasst eine Hohlwelle oder Trägerhülse 512, auf deren in Fig. 11 rechtem Ende ein erster Flansch 513 koaxial zur Trägerhülse 512 und axial auf dieser verschiebbar angeordnet ist. Der erste Flansch 513 entspricht in seinem Aufbau im Wesentlichen dem ersten Flansch 312 entsprechend dem zweiten Ausführungsbeispiele der Spannbaugruppe 310 nach Fig. 9. Ebenso wie die Spannbaugruppe 310 weist auch die Spannbaugruppe 510 an dem in Fig. 11 linken Ende der Trägerhülse 512 einen fest angeordneten zweiten Flansch 513 auf. An den Flanschen 512 sind Spannscheren 514 angeordnet, die in ihrem Aufbau und ihre Funktionsweise den Spannscheren 314 der Spannbaugruppe 310 entsprechen.

Wie in Fig. 11 zu sehen ist, weist die Spannbaugruppe 510 einen Betätigungsmechanismus 520 auf. Der Betätigungsmechanismus 520 umfasst einen Kolben-Zylinder-Mechanismus mit einem auf der Trägerhülse 512 axial fest angeordneten ringförmigen Kolben 522 und einem hülsenförmigen Zylinder 524, der koaxial zur Mittelachse MS der Spannbaugruppe 510 auf der Trägerhülse 512 fluiddicht angeordnet ist. Der Zylinder 524 liegt mit seiner Innenfläche auf der Außenfläche des Kolben 522 auf und ist in axialer Richtung verschiebbar gehalten.

Der Betätigungsmechanismus 520 umfasst weiterhin ein koaxial zur Mittelachse MS der Spannbaugruppe 510 auf der Trägerhülse 512 angeordnetes, hülsenförmiges Anschlusselement 526, mit einem Anschlussabschnitt 526a, einem Befestigungsabschnitt 526b und einer Zylinderhülse in Form eines rohrförmigen Abschnitts 526c.

Der Innendurchmesser des zum in Fig. 11 rechten Endes der Trägerhülse 512 weisenden Befestigungsabschnitts 526b des Anschlusselements 526 entspricht dem Außendurchmesser des Zylinder 524, dessen linkes Ende in dem Befestigungsabschnitt 526b aufgenommen und daran fluiddicht befestigt ist. Der Innendurchmesser des Anschlussabschnitts 526a entspricht dem Außendurchmesser der Trägerhülse 512, und ist auf dieser verschiebbar gehalten. Der rohrförmige Abschnitt 526c schließt sich an das in Fig. 11 rechte Ende des Befestigungsabschnitts 526b an und erstreckt sich in Richtung des rechten Flansch 513. Der Innendurchmesser der Zylinderhülse bzw. des rohrförmigen Abschnitts 526c ist größer als der Außendurchmesser des Zylinders 524.

Wie weiterhin in Fig. 11 zu sehen ist, weist der rechte Flansch 513 an seiner zum Betätigungsmechanismus 520 weisenden Seite eine erste zylindrische Ausnehmung 513c auf, deren Durchmesser dem Außendurchmesser des Zylinder 524 entspricht, und in die das rechte Ende des Zylinder 524 hineinragt und dort befestigt ist.

Zwischen dem Kolben 522 und der zu dem Kolben 522 weisenden Stirnseite des Anschlussabschnitts 526a des Anschlusselements 526 einerseits und der Innenseite des linken Endes des Zylinder 524 sowie der dieser Fläche gegenüberliegenden Außenseite der Trägerhülse 512 ist ein ringförmiger Zylinderraum 528 gebildet.

Der Flansch 513 weist eine zweite zylindrische Ausnehmung 513d auf seiner zum Betätigungsmechanismus 520 Seite auf, die koaxial zur ersten Ausnehmung 513c ausgerichtet ist, deren Durchmesser dem Außendurchmesser des rohrförmigen Abschnitts 526c des Anschlusselements 526 entspricht, welcher in diesen hineinragt und dort befestigt ist.

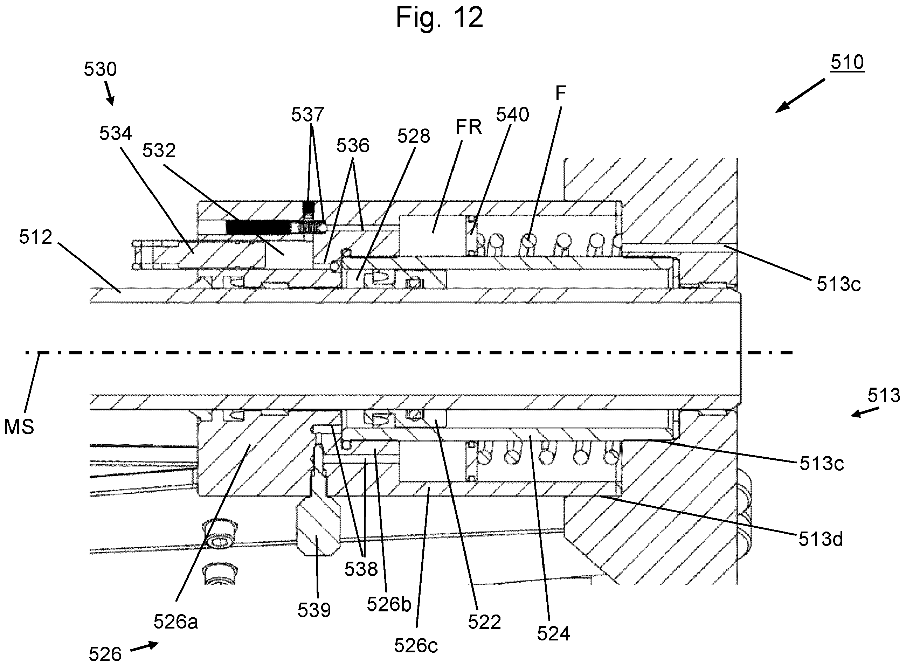

Der Betätigungsmechanismus 520 umfasst weiterhin einen integrierten Antrieb zur Betätigung der Spannbaugruppe 520, wie dies nachfolgend im Zusammenhang mit Fig. 12 erläutert wird, welche eine vergrößerte Darstellung des Betätigungsmechanismus 520 der Spannbaugruppe 510 entsprechend Fig. 11 ist.

Der Antrieb des Betätigungsmechanismus 520 beinhaltet eine Fluidpumpe 530 mit einem Kolben 532, der in einem Zylinder 534 bewegt werden kann. Der Zylinder 534 ist im Anschlussabschnitt 526a des Anschlusselements 526 angeordnet, und erstreckt sich parallel zur Mittelachse MS der Spannbaugruppe 520 vom in Fig. 12 linken Ende des Anschlusselements 526 nach rechts in den Anschlussabschnitt 526a hinein.

Zwischen der Außenfläche des Zylinders 524 der Kolben-Zylinder-Anordnung und der Innenfläche des rohrförmigen Abschnitts 526c ist ein ringförmiger Hohlraum gebildet. In dem Hohlraum ist ein Ringkolben 540 angeordnet, der auf der Außenfläche des Zylinder 524 verschiebbar aufsitzt und mit seiner Außenumfangsfläche an der Innenfläche des rohrförmigen Abschnitts 526c des Anschlusselements 526 anliegt. Der Ringkolben 540 teilt den ringförmigen Hohlraum. An der zur Fluidpumpe 530 weisenden Seite des Ringkolbens 540 ist ein Fluidreservoir FR gebildet.

Das Fluidreservoir oder Reservoir FR steht über im Anschlusselement 526 angeordnete Kanäle 536 mit dem Zylinder 532 der Fluidpumpe 530 und dem ringförmigen Zylinderraum 528 in Verbindung. In den Kanälen 536 sind Rückschlagventile 537 in Form von federbelasteten Kugelrückschlagventilen angeordnet, die einen Rückfluss von Fluid durch die Kanäle 536 in das Reservoir FR verhindern.

Im Anschlusselement 536 befinden sich weitere Kanäle 538, die den ringförmigen Zylinderraum 528 mit dem Reservoir FR verbinden. In den Kanälen 538 ist ein Rückströmventil 539 angeordnet, das einen Rückfluss von Fluid aus dem ringförmigen Zylinderraum 528 in das Reservoir FR ermöglicht.

In dem Hohlraum zwischen der Außenfläche des Zylinders 524 der Kolben-Zylinder-Anordnung und der Innenfläche des rohrförmigen Abschnitts 526c ist auf der in Fig. 12 rechten Seite des Ringkolbens 540 ein Federelement F in Form einer Schraubendruckfeder angeordnet. Das Federelement oder die Feder F ist koaxial auf dem Zylinder 524 angeordnet, und erzeugt eine in axialer Richtung auf den Ringkolben 540 wirkende Kraft. Der ringförmige Hohlraum rechts des Ringkolbens 540 steht über eine entsprechende Belüftungsbohrung 513e im Flansch 513 mit der Atmosphäre in Verbindung.

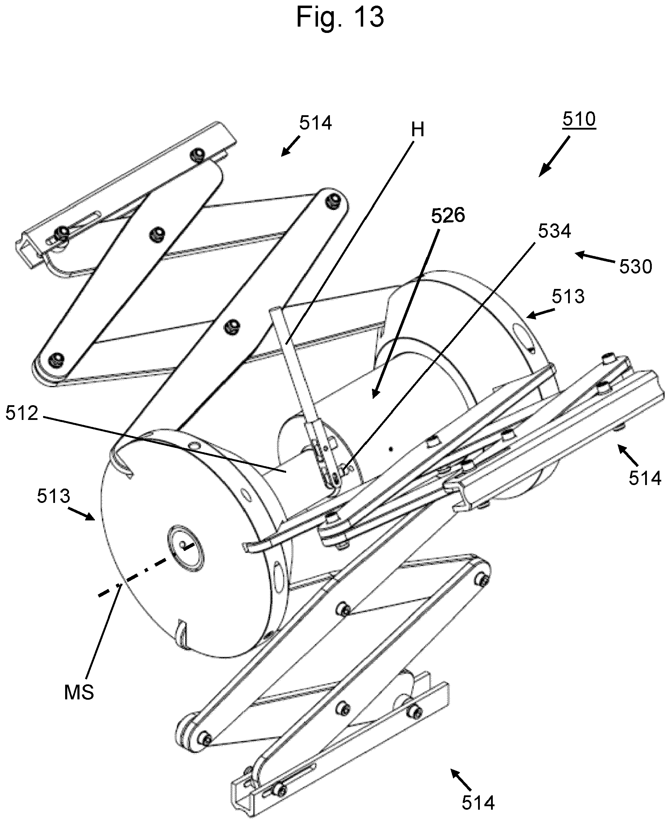

Die Fluidpumpe 530 der Spannbaugruppe 510 wird manuell betätigt. Hierzu ist, entsprechend Fig. 13, die eine schematische, perspektivische Darstellung der Spannbaugruppe 510 zeigt, ein Hebel H vorgesehen. Der Hebel H ist an der in Fig. 13 nach links weisenden Stirnseite des Anschlusselements 526 gelenkig angebracht, und an seinem unteren Ende mit dem Kolben 534 der Fluidpumpe 530 verbunden, so dass der Kolben 534 durch die Betätigung des Hebels H im Zylinder 532 reversibel hin und her bewegt werden kann.

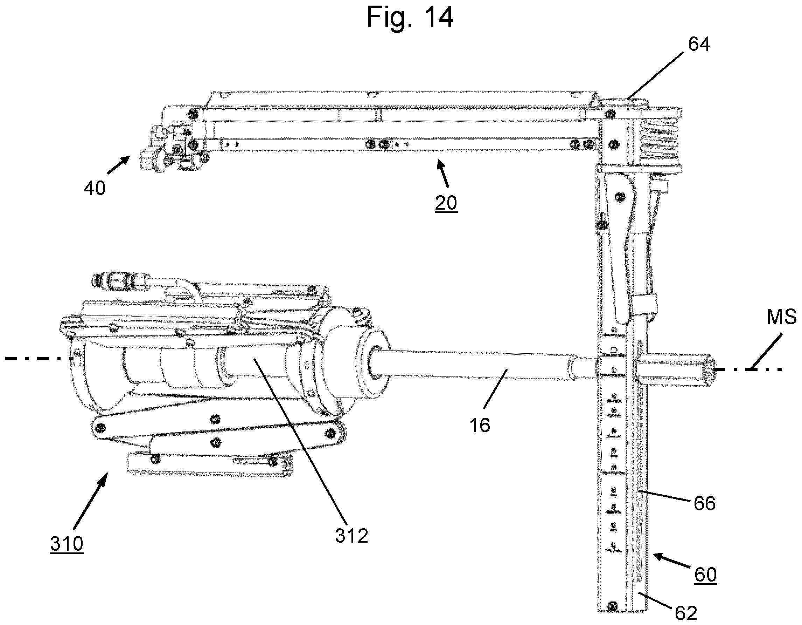

Fig. 14 ist eine schematische, perspektivische Darstellung eines Schälgeräts mit einer Schälbaugruppe nach Fig. 3 und einer Spannbaugruppe nach Fig. 9.

Wie in Fig. 14 zu sehen ist, erstreckt sich durch die Hohlwelle oder Trägerhülse 312 der Spannbaugruppe 310 eine Spindel, wie die Gewindespindel 16, und ragt aus dem in Fig. 14 rechten Ende der Spannbaugruppe 310 heraus. Das rechte Ende der Spindel 16 erstreckt sich durch das Langloch 66 des Schälarmträgers 60, der daran befestigt ist. Am zweiten Ende 64 des Schälarmträgers 60 ist die Schälbaugruppe 20 mit der Schälmesseranordnung 40 angeordnet, die sich zumindest annähernd parallel zur Mittelachse MS der Spannbaugruppe 310 erstreckt. Wie weiter in Fig. 14 zu sehen ist, kann auch der Schälarmträger 60 mit Markierungen versehen, die entlang des Langlochs 66 angeordnet sind, und die die Befestigungsposition des Schälarmträgers 60 an der Spannbaugruppe 310 in Bezug auf den Durchmesser eines zu bearbeitenden rohrförmigen Körpers R anzeigen.

Um von einem rohrförmigen Körper R, wie beispielsweise einem Kunststoffrohr, mit Hilfe des Schälgeräts S Material von dessen Oberfläche abzutragen, wird zunächst die Spannbaugruppe 10 im Inneren des rohrförmigen Körpers R positioniert und so verspannt, dass die Mittelachse MS der Spannbaugruppe 10 zumindest annähernd koaxial zur Mittelachse MR des rohrförmigen Körpers R ausgerichtet ist.

Anschließend wird die Gewindespindel 16 mit dem daran befindlichen Schälarmträger 60 und der Schälarmeinheit 30, in die Trägerhülse 12 eingeführt, sodass die Schälmesseranordnung 40 radial über den zu schälenden Abschnitt des rohrförmigen Körpers R positioniert ist. An der Trägerhülse 12 bzw. der Mutter 18 kann eine Arretierung vorgesehen sein, die ein ungewolltes axiales Verschieben der Gewindespindel verhindert.

Danach wird, wenn dies noch nicht geschehen ist, die Verbindung zwischen dem Schälarmträger 60 und dem linken Ende 16a der Gewindespindel 16 gelöst. Der Schälarmträger 60 kann jetzt solange an dem Ende 16a der Gewindespindel 16 über das Langloch 66 entlang verschoben werden, bis die Schälbaugruppe 20 bzw. der Messerwagen 42 der Schälmesseranordnung 40 mit den Laufrollen 46 auf dem rohrförmigen Körper R aufsteht, und die Schälarmelemente 32, 34 der Schälarmeinheit 30 zumindest annähernd parallel zur Mittelachse MR des rohrförmigen Körpers R ausgerichtet sind. Anschließend wird der Schälarmträger 60 in dieser Position an der Gewindespindel 16 fixiert.

In dieser Position kann der Messerwagen 42 der Schälmesseranordnung 40 bereits mit einer geringen Vorspannung auf dem rohrförmigen Körper aufliegen. Um diese Vorspannung zu erhöhen, wird nun das Federelement 54 weiter komprimiert.

Im ersten Ausführungsbeispiel entsprechend den Figuren 1 und 2 geschieht das Vorspannen des Federelements 54 dadurch, dass die Druckplatte 52, beispielsweise manuell, in Richtung des zweiten Endes 64 des Schälarmträgers 60 verschoben wird. Hierbei befindet sich die Schälarmeinheit 30 noch nicht in der in Fig. 1 gezeigten Schälposition, d.h., das Federelement 54 befindet sich in einem unbelasteten Zustand. Anschließend wird die Schälarmeinheit auf den rohrförmigen Körper R aufgesetzt und das Federelement 54 weiter vorgespannt werden. Durch die von dem elastischen Element 54 auf die Druckplatte 52 ausgeübte Kraft verkantet die Druckplatte 52 an dem Schälarmträger 60, und ist so gegen Verrutschen gesichert. Zusätzlich kann eine (nicht gezeigte Klemmung) vorgesehen sein, die die Druckplatte 52 in ihrer Position auf dem Schälarmträger 60 sichert, z.B. gegen unbeabsichtigtes Verschieben bei eventuell auftretenden Lastwechseln.

Im zweiten Ausführungsbeispiel nach den Figuren 3 bis 5 wird der Spannhebel 84, der sich vor dem Heranführen der Schälbaugruppe 20 an die Oberfläche des rohrförmigen Körpers R in der in Fig. 3 gezeigten geöffneten Stellung befindet, in die in Fig. 4 gezeigte Spannstellung überführt, wodurch die Druckplatte 72 in Richtung des zweiten Endes 64 des Schälarmträgers 60 verschoben wird.

Hierbei sollte die durch die Kraftbeaufschlagungseinheit oder Vorspanneinrichtung 50, 70 erzeugte Kraft, mit der der Messerwagen 42 auf die Oberfläche des rohrförmigen Körpers R gedrückt wird, größer sein als die Kraft, mit der das Schälmesser 44 durch das in dem Messerwagen 42 befindliche Federelement gegen die Rohroberfläche gedrückt wird, um ein Abheben des Messerwagens 42 von dem rohrförmigen Körper R zu verhindern. Hierdurch wird ein sicherer Ausgleich von eventuell vorhandenen Ovalitäten des rohrförmigen Körpers R erreicht, und sichergestellt, dass das Schälmesser 44 mit gleichbleibender Kraft auf dem rohrförmigen Körper R aufliegt.

Bei Verwendung eines Schälgeräts in der dritten oder vierten Ausführungsform entsprechend den Figuren 6 oder 7 kann der Schälarmträger 160 an der Spindel 16 in gleicher Weise befestigt werden. Zur Festlegung der Position des Schälarmträgers 160 an der Spindel 16, ist dieser mit Markierungen versehen, die entlang des Langlochs 166 angeordnet sind, und die die Befestigungsposition des Schälarmträgers 160 an der Spannbaugruppe in Bezug auf den Durchmesser eines zu bearbeitenden rohrförmigen Körpers R anzeigen. Die Spindel 16 kann somit auf einfache Weise an der Markierung entsprechend dem Durchmesser des zu bearbeitenden rohrförmigen Körpers R befestigt werden.

Um die durch das Schälmesser 144 der Messerbaugruppe 140 auf die Oberfläche des rohrförmigen Körpers R wirkende Kraft einzustellen, wird die Stellschraube 152 der Kraftbeaufschlagungseinheit oder Vorspanneinheit 150 betätigt. Durch Herausdrehen der Stellschraube 152 aus dem zweiten Ende 164 des Schälarmträgers 160 wird die auf die erste Ende 134a des Schälarmelements 134 wirkende Feder 154 entlastet. Hierdurch kann sich die Schälmesserbaugruppe 140 weiter in Richtung der Oberfläche des rohrförmigen Körpers R bewegen, ein radiales Rückfedern erfordert aber eine geringere Kraft, als bei einer stärker vorgespannten Feder F. Wird demgegenüber die Feder F durch Einschrauben der Stellschraube in den Schälarmträger 160 weiter gespannt, ist für ein weiteres Einfedern eine größere Kraft notwendig.

Zum Abtragen von Material von der Oberfläche des rohrförmigen Körpers R wird das Schälgerät S mit der Schälbaugruppe 20 um den rohrförmigen Körper R rotierend angetrieben. Dies kann manuell geschehen, wenn beispielsweise im Bereich des zweiten Endes 64 des Schälarmträgers 60 ein Griff vorgesehen ist. Alternativ hierzu besteht die Möglichkeit, das Schälgerät S mittels einer Ratsche oder einem elektrischen Gerät, wie einem Akkuschrauber oder einer Bohrmaschine, die an dem Befestigungspunkt der Gewindespindel 16 am Schälarmträger 60 mittels eines entsprechenden Adapter angesetzt werden können, anzutreiben.

Um axialen Vorschub für den Messerwagen 42 zu erzeugen, kann die Position der Schälbaugruppe 20 entlang der Mittelachse MS des Spannelements 10 bzw. der Mittelachse R des rohrförmigen Körpers R eingestellt bzw. verändert werden. Dies kann schrittweise oder kontinuierlich erfolgen. Bei schrittweise axialem Vorschub des Messerwagens 42 ist darauf zu achten, dass die Vorschublänge maximal der Breite des Schälmessers 44 entspricht, um einen gleichmäßigen Materialabtrag in axialer Richtung zu erhalten. Erfolgt der axiale Vorschub kontinuierlich, so sollte dieser bei einer Umdrehung der Schälbaugruppe 20 um den rohrförmigen Körper R ebenfalls maximal der Breite des Schälmessers 44 entsprechend.

Ein schrittweiser axialer Vorschub kann dadurch erreicht werden, dass die Verbindung zwischen dem Schälarmträger 60 und der Gewindespindel 16 nach jeder Umdrehung der Schälbaugruppe 20 um den rohrförmigen Körper R gelöst wird, und der Schälarmträger 60 auf der Gewindespindel 16 um ein entsprechendes Maß entlang der Mitteachse MR des rohrförmigen Körpers R verschoben und wieder fixiert wird.

Um einen kontinuierlichen Vorschub zu erreichen, kann vorgesehen sein, dass sich die Gewindespindel 16 mit jeder Umdrehung der Schälbaugruppe 20 um den rohrförmigen Körper R um eine gewünschte Länge in die bzw. durch die Spannbaugruppe 10 schraubt. Die Spannbaugruppe 10 kann hierzu beispielsweise eine entsprechende Gewindehülse aufweisen, die die Gewindespindel 16 aufnimmt.

Alternativ kann vorgesehen sein, dass der Schälarmträger 60 am Ende 16a der Spindel 16 bezogen auf die Mittelachse MS der Spannbaugruppe 10 radial fest aber um diese drehbar angebracht ist. In dieser Ausgestaltung wird die Gewindespindel 16 manuell nach jeder Umdrehung der Schälbaugruppe 20 um den rohrförmigen Körper R um eine gewünschte Länge in die bzw. durch die Spannbaugruppe 10 ein- bzw. durchgeschraubt.

Das erfindungsgemäße Schälgerät S kann ebenfalls mit einer Spannbaugruppe 310, 410, 510 ausgestattet sein, deren Funktionsweise nachfolgend erläutert wird.

Die Spannbaugruppe 310 entsprechend dem im Zusammenhang mit Fig. 9 erläuterten zweiten Ausführungsbeispiel wird koaxial in den zu bearbeitenden rohrförmigen Körper R eingesetzt. Über die mit dem Betätigungsmechanismus 320 verbundene Fluidleitung HS wird ein unter Druck stehendes Fluid, wie Hydrauliköl, in den ringförmigen Zylinderraum 328 gefördert. Durch das unter Druck stehende Fluid wird das Anschlusselement 326 axial von dem auf der Trägerhülse 312 fest angeordneten Kolben 322 wegbewegt. Über den fest mit dem Anschlusselement 326 verbundenen Zylinder 324 wird der ebenfalls fest mit dem Zylinder 324 verbundene Flansch 313 auf der Trägerhülse 312 mit verschoben. Hierdurch nähern sich die Flansch 313 einander an, und die Spannscheren 314 werden betätigt. Dabei bewegen sich die Stützelemente 315 solange radial von der Mittelachse MS der Spannbaugruppe 310 weg, bis diese an der Innenseite des rohrförmigen Körpers R anliegen, und die Spannbaugruppe 310 in diesem verspannen.

Die Spannbaugruppe 410 entsprechend Fig. 10 umfasst zwei Betätigungsmechanismen 420. Diese funktionieren in der gleichen Weise wie der Betätigungsmechanismus 320 der Spannbaugruppe 310. Die Betätigungsmechanismen 420 der Spannbaugruppe 410 können einzeln betätigt werden, wodurch lediglich jeweils einer der Flansch 413, wie im Zusammenhang mit Fig. 9 beschrieben, auf der Trägerhülse 312 verschoben wird. Es kann genügen, lediglich einen der Betätigungsmechanismen 420 zu aktivieren. Es können aber auch beide Betätigungsmechanismen 420 nacheinander aktiviert werden. Darüber hinaus ist es ebenfalls möglich, beide Betätigungsmechanismen 420 gleichzeitig zu aktivieren, um die Spannbaugruppe 410 in dem zu bearbeitenden rohrförmigen Körper R zu verspannen.

Zum Entfernen der Spannbaugruppen 310, 410 aus dem rohrförmigen Körper R wird das unter Druck stehende Fluid entlastet, indem ein Rückfluss in die Fluidquelle ermöglicht wird. Die so entlasteten Spannscheren 314, 414 können manuell zusammengeschoben werden.

Zum Verspannen der Spannbaugruppe 510 entsprechend dem im Zusammenhang mit den Figuren 11 und 12 beschriebenen vierten Ausführungsbeispiel, wird die Spannbaugruppe 510 koaxial in den zu bearbeitenden rohrförmigen Körper R gehalten. Zur Betätigung der Spannscheren 514 wird der Hebel H hin und her bewegt, wodurch die Fluidpumpe 530 betätigt wird. Mittels dieser wird Fluid, wie Hydrauliköl, aus dem Fluidreservoir FR über die Kanäle 536 in den ringförmigen Zylinderraum 528 gefördert. Die in den Kanälen 536 angeordneten Rückschlagventile 537 verhindern einen Rückfluss von unter Druck stehenden Fluid in das Reservoir FR während des Spannens der Spannbaugruppe 510. Durch das unter Druck stehende Fluid wird das Anschlusselement 526 axial von dem auf der Trägerhülse 512 fest angeordneten Kolben 522 wegbewegt. Zusammen mit dem Anschlusselement 526 und dem fest damit verbundenen Zylinder 524 wird auch der Flansch 513 auf der Trägerhülse 512 verschoben. Dadurch werden die Spannscheren 514 aktiviert und die Spannbaugruppe 510 wird in dem rohrförmigen Körper R verspannt. Zum Lösen der Spannbaugruppe 510 aus dem rohrförmigen Körper R wird das Rückströmventil 539 aktiviert, wodurch das in dem ringförmigen Zylinderraum 528 befindliche, unter Druck stehende Fluid über die Kanäle 538 in das Fluidreservoir FR zurückströmen kann. Zur Entnahme der Spannbaugruppe 510 aus dem rohrförmigen Körper R können die Spannscheren 514 manuell zusammengedrückt werden.

Während des Spannens bzw. Entlastens der Spannbaugruppe 510 verändert sich die Größe des Fluidreservoir FR entsprechend der jeweils entnommenen oder zurückgeführten Fluidmenge, wobei der Ringkolben 540 entsprechend mit bewegt wird. Die auf die die vom Fluidreservoir FR abgewandte Seite des Ringkolbens 540 wirkende Feder F verhindert ein Verkippen des Ringkolbens 540 und ein Eindringen von Luft in das Hydrauliksystem.

Die im Zusammenhang mit den Figuren 9 bis 12 beschriebenen Spannbaugruppen 310, 410, 510 sind fluidbetrieben. Daher versteht es sich, dass zwischen den relativ zueinander beweglichen Elementen der mit dem Fluid in Kontakt kommenden Baugruppen entsprechende Dichtungen vorgesehen sind, die ein ungewolltes Austreten von Fluid, oder ein ebenso ungewolltes Eindringen von Außenluft in das Fluidsystem verhindern.

Der Schälarmträger 60, 160 ist in den Ausführungsbeispielen der Figuren 1 bis 7 mit einem im Wesentlichen quadratischen Querschnitt gezeigt. Selbstverständlich ist es möglich, dass der Schälarmträger 60, 160 einen hiervon abweichenden Querschnitt, beispielsweise einen quadratischen, dreieckigen oder runden Querschnitt aufweist.

Entsprechend der Querschnittsform des Schälarmträgers 60, 160 können neben der oben beschriebenen Fixierung des Schälarmträgers 60, 160 an dem Ende 16a der Gewindespindel 16 zusätzliche Formschlussmittel vorgesehen sein, um den Schälarmträger 60, 160 weiter zu stabilisieren, und vor allem ein ungewolltes Verdrehen des Schälarmträgers 60, 160 um eine Achse in dessen Längserstreckung zu vermeiden, wie beispielsweise Hülsen oder Klammern, die ein Verkippen des Schälarmträgers 60, 160 gegenüber der Gewindespindel 16 verhindern.

Es kann darüber hinaus erfindungsgemäß vorgesehen sein, dass alternativ oder zusätzlich zur Druckplatte 52, 72 am zweiten Ende 64 des Schälarmträgers 60 eine weitere Druckplatte vorgesehen ist, die zwischen dem ersten Ende 34a des Schälarmelements 34 und dem elastischen Element 54 angeordnet ist. An dieser weiteren Druckplatte ist das Sicherungs- und Positionierelement 56, 76 angeordnet. Darüber hinaus kann am ersten Ende 34a des Schälarmelements 34 eine auf diese Druckplatte wirkende Spindel, oder ein ähnlich wirkendes Element, angebracht sein, die beispielsweise mittels eines entsprechenden Knaufs bewegt werden kann, um die Druckplatte in Richtung des elastischen Elements 54 zu bewegen, um eine weitere Einstellung der Vorspannung vorzunehmen. Prinzipiell können alle Elemente des erfindungsgemäßen Schälgeräts aus einem geeigneten Metall, wie Stahl oder Aluminium gefertigt sein, um die erforderliche Festigkeit zu gewährleisten. Einzelne Elemente, die eine geringere Festigkeit aufweisen müssen, oder die in unmittelbaren Kontakt mit dem zu bearbeitenden rohrförmigen Körper, insbesondere einem Kunststoffrohr, kommen ohne diesen bearbeiten zu müssen, wie z.B. die Laufrollen der Messeranordnung oder die äußersten Elemente der Spannscheren, können, um diesen nicht zu beschädigen, aus einem geeigneten Kunststoff gefertigt sein.

Wie im Zusammenhang mit Fig. 8 beschrieben, weist der zweite Flansch 13 ein Innengewinde auf, welches mit einem entsprechenden Außengewinde auf dem rechten Ende der Trägerhülse 12 zusammenwirkt, um den Flansch 13 auf der Trägerhülse 12 zum Spannen und Entspannen der Spannscheren 14 in axialer Richtung zu bewegen. Es kann aber auch vorgesehen sein, die axiale Beweglichkeit des zweiten Flanschs 13 mit anderen Mitteln zu realisieren. So kann beispielsweise die rechte Seite der Trägerhülse 12 als hydraulischer oder pneumatischer Kolben ausgeführt sein, auf dem der als hydraulischer oder pneumatische Zylinder gestaltete zweite Flansch 13 mittels einer entsprechenden hydraulischen oder pneumatischen Pumpe reversibel bewegbar ist.

Ein erfindungsgemäßes Schälgerät S umfasst eine Spannbaugruppe, einen Schälarmträger und eine Schälbaugruppe mit einer Schälarmeinheit. Dabei ist es möglich, jede Spannbaugruppe 10, 310, 410, 510 mit jedem der Schälarmträger 60,160 und jedem der Schälarmeinheiten 30,130, 230 zu kombinieren.

Darüber hinaus ist es möglich, die Spannbaugruppen 10, 310, 410, 510, neben einem Schälwerkzeug, generell als Werkzeugträger für jede Art von Werkzeug zur Bearbeitung eines annähernd rohrförmigen Körpers zu verwenden, wie einen Rohrschneider oder einen Gewindeschneider. Je nach der Art des Werkzeugs kann dieses direkt an der Spannbaugruppe 10, 310, 410, 510 oder an dem Schälarmträger 60,160 angeordnet werden.

### Weitere Beispiele

Ergänzend zur vorstehenden Beschreibung der Erfindung offenbart die vorliegenden Anmeldung ferner die im Folgenden nummerierten zusätzlichen Beispiele.

Beispiel 1. Schälgerät zum zumindest teilweisen Abtragen der Oberfläche eines wenigstens annähernd rohrförmigen Körpers mit einer Mittelachse, insbesondere eines Kunststoffrohrs, aufweisend: eine Spannbaugruppe mit einer Mittelachse und wenigstens einem Spannelement zum Verspannen des Schälgeräts an dem rohrförmigen Körper, wobei im montierten Zustand die Mittelachse der Spannbaugruppe zumindest annähernd mit der Mittelachse des rohrförmigen Körpers zusammen fällt, und eine Schälbaugruppe mit einer Schälarmeinheit, einer an einem ersten Ende der Schälarmeinheit angeordneten Schälmesseranordnung und einem Schälarmträger mit einem ersten Ende und einem zweiten Ende, der die Spannbaugruppe mit der Schälarmeinheit verbindet, wobei die Schälarmeinheit mit einem zweiten Ende mit dem Schälarmträger derart verbunden ist, dass die Schälarmeinheit und die Mittelachse der Spannbaugruppe im montierten Zustand in einer gemeinsame Ebene liegen, wobei die Schälmesseranordnung ein Schälmesser aufweist, wobei die Schälarmeinheit mit ihren ersten und zweiten Enden derart mit der Schälmesseranordnung und dem Schälarmträger verbunden und in der gemeinsamen Ebene mit der Mittelachse der Spannbaugruppe verschwenkbar ist, dass die Schälmesseranordnung in jeder Schwenkposition der Schälarmeinheit ihre Ausrichtung zur Mittelachse der Spannbaugruppe beibehält.

Beispiel 2. Schälgerät nach Beispiel 1, weiterhin umfassend eine Kraftbeaufschlagungseinheit zum reversiblen Vorspannen der Schälarmeinheit in einer Schälposition in eine Richtung in der gemeinsamen Ebene der Schälarmeinheit und der Mittelachse der Spannbaugruppe.

Beispiel 3. Schälgerät nach einem der Beispiele 1 oder 2, wobei die Spannbaugruppe mehr als ein Spannelement, vorzugsweise drei Spannelemente, aufweist, vorzugsweise in Form von Spannscheren.

## Patentansprüche

1. Spannbaugruppe (10; 110; 210; 310; 510) als Werkzeugträger für ein Werkzeug, wie eine Schälmesseranordnung eines Schälgeräts, zur Bearbeitung eines annähernd rohrförmigen Körpers (R) mit einer Mittelachse (MR), insbesondere eines Kunststoffrohres, aufweisend:
eine Mittelachse (MS),
eine koaxial zur Mittelachse (MS) der Spannbaugruppe (10; 110; 210; 310; 510) angeordnete Trägerwelle (12; 312; 412; 512),
wenigstens eine auf der Trägerwelle (12; 312; 412; 512) angeordnete und im Wesentlichen radial nach außen gerichtete Spanneinrichtung (13, 14; 313, 314; 413, 414; 513, 514),
einen auf der Trägerwelle (12; 312; 412; 512) angeordneten Betätigungsmechanismus (18; 320; 420; 520) zum Betätigen der wenigstens einen Spanneinrichtung (13, 14; 313, 314; 413, 414; 513, 514) zum reversiblen Verspannen der Spannbaugruppe (10; 110; 210; 310) in dem rohrförmigen Körper (R) koaxial zu dessen Mittelachse (MR), und
wobei die wenigstens eine Spanneinrichtung (13, 14; 313, 314; 413, 414; 513, 514) Spannscheren (14; 314; 414; 514) mit wenigstens zwei gelenkig miteinander verbundenen Scherenelementen (14a, 14b; 314a, 314b) sowie wenigstens ein auf der Trägerwelle (12; 312; 412; 512) verschiebbar angeordnetes Spannelement (13; 313; 413; 513) umfasst, mit dem eines der wenigstens zwei Scherenelemente (14a, 14b; 314a, 314b) der Spannscheren (14; 314; 414; 514) gelenkig verbunden ist, und das zur Betätigung der Spanneinrichtung (13, 14; 313, 314; 413, 414; 513, 514) durch den Betätigungsmechanismus (18; 320; 420; 520) auf der Trägerwelle (12; 312; 412; 512) reversibel veschiebbar ist.

2. Spannbaugruppe nach Anspruch 1,
wobei der Betätigungsmechanismus (18) einen Gewindeeingriff zwischen der Trägerwelle (12) und dem wenigstens einen Spannelement (13) sowie ein Betätigungselement (18) umfasst.

3. Spannbaugruppe nach Anspruch 1,
wobei der Betätigungsmechanismus (320; 420; 520) wenigstens einen koaxial auf der Trägerwelle (312; 412; 512) angeordneten Kolben-Zylinder-Mechanismus umfasst, der mit dem wenigstens einen Spannelement (313; 413; 513) zusammenwirkt.

4. Spannbaugruppe nach Anspruch 3,
wobei ein ringförmige Zylinderraum (328; 528) zwischen der Trägerwelle (312; 412; 512) und einer koaxial auf der Trägerwelle (312; 412; 512) angeordneten Zylinderhülse (324; 524) gebildet ist, in der ein ringförmiger Kolben (322; 522) angeordnet ist.

5. Spannbaugruppe nach Anspruch 4,
wobei die Zylinderhülse (324; 524) durch den Betätigungsmechanismus (320; 420; 520) reversibel auf der Trägerwelle (312; 412; 512) verschiebbar ist.

6. Spannbaugruppe nach einem der Ansprüche 3 bis 5,
umfassend ein zweites, auf der Trägerwelle (312; 412) verschiebbar angeordnetes Spannelement (313; 413), welches mit dem zweiten der wenigstens zwei Scherenelement (314b; 314a) der Spannscheren (313; 413) gelenkig verbunden ist, sowie einen weiteren mit dem zweiten Spannelement (313; 413) verbundenen Kolben-Zylinder-Mechanismus.

7. Spannbaugruppe nach einem der Ansprüche 3 bis 5,
wobei der Betätigungsmechanismus (520) einen integrierten Antriebsmechanismus (530, FR) aufweist.

8. Spannbaugruppe nach Anspruch 7,
mit einer koaxial auf der Zylinderhülse (524) angeordneten weiteren Zylinderhülse (526c), zur Bildung eines integrierte Fluidreservoirs (FR) zwischen der Zylinderhülse (524) und der weiteren Zylinderhülse (526c).

9. Spannbaugruppe nach Anspruch 8,
wobei der Antriebsmechanismus (530, FR) ein koaxial auf der Trägerwelle (512) angeordnetes Anschlusselement (526) aufweist, welches die weitere Zylinderhülse (526c) umfasst.

10. Spannbaugruppe nach Anspruch 8 oder 9,
weiter umfassend einen integrierten Pumpmechanismus (530) zum Überführen des Fluids aus dem Fluidreservoir (FR) in den Zylinderraum (528) des Kolben-Zylinder-Mechanismus, integrierten Pumpenzylinder (532) und einem darin geführten Pumpenkolben (534).

11. Spannbaugruppe nach Anspruch 10,
wobei der integrierte Pumpmechanismus (530) einen Hebel (H) zur manuellen Betätigung aufweist.

12. Spannbaugruppe nach einem der Ansprüche 8 bis 11,
wobei zwischen der Außenfläche der Zylinderhülse (524) und der Innenfläche der weiteren Zylinderhülse (526c) ein auf einen Ringkolben (540) des Fluidreservoirs (FR) wirkendes Federelement (F) angeordnet ist.

13. Spannbaugruppe nach einem der Ansprüche 1 bis 12,
wobei an den äußeren Enden der Scherenelemente (14a, 14b; 314a, 314b) der Spanneinrichtung wenigstens ein annähernd U-förmiges Stützelement (15; 315) angeordnet ist, das in seiner Längserstreckung zumindest annähernd parallel zur Mittelachse (MS) der Spannbaugruppe (10; 110; 210; 310; 510) ausgerichtet ist, und mit seiner offenen Seite zur Mittelachse (MS) der Spannbaugruppe (10; 110; 210; 310; 510) weist.

14. Spannbaugruppe nach einem der Ansprüche 1 bis 13,
wobei die Spannbaugruppe mehr als eine Spanneinrichtung (13, 14; 313, 314; 413, 414; 513, 514), vorzugsweise drei Spanneinrichtungen, aufweist, die weiter vorzugsweise in gleicher Winkelteilung zueinander angeordnet sind.

15. Spannbaugruppe nach einem der Ansprüche 1 bis 14,
wobei in unmittelbarer Nähe zur Mittelachse der Spannbaugruppe und zwischen zwei benachbarten Spanneinrichtungen ein Halteelement (H) angeordnet ist.
